(19) Europäisches Patentamt European Patent Office Office européen des brevets

(11) **EP 4 449 341 B1**

(12) **EUROPEAN PATENT SPECIFICATION**

(45) Date of publication and mention of the grant of the patent:
**20.05.2026 Bulletin 2026/21**

(21) Application number: **22844700.9**

(22) Date of filing: **07.12.2022**

(51) International Patent Classification (IPC):
*G06T 5/00* (2024.01)

(52) Cooperative Patent Classification (CPC):
**G06T 5/73; G06T 2207/20012; G06T 2207/20201; G06T 2207/20221**

(86) International application number:
**PCT/US2022/052148**

(87) International publication number:
**WO 2023/114070 (22.06.2023 Gazette 2023/25)**

(54) **INTERACTIVE MOTION BLUR ON MOBILE DEVICES**

INTERAKTIVE BEWEGUNGSUNSCHÄRFE AUF MOBILEN VORRICHTUNGEN

FLOU DE MOUVEMENT INTERACTIF SUR DES DISPOSITIFS MOBILES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.12.2021 EP 21214983**
**16.12.2021 US 202163290322 P**

(43) Date of publication of application:
**23.10.2024 Bulletin 2024/43**

(73) Proprietor: **Dolby Laboratories Licensing Corporation**
**San Francisco, CA 94103 (US)**

(72) Inventors:
• **LEE, Dae Yeol**
**Austin, TX 78731 (US)**
• **GADGIL, Neeraj J.**
**Pune, 411038 (IN)**
• **SU, Guan-Ming**
**San Francisco, CA 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
• **LANCELLE M ET AL: "Controlling Motion Blur in Synthetic Long Time Exposures", COMPUTER GRAPHICS FORUM : JOURNAL OF THE EUROPEAN ASSOCIATION FOR COMPUTER GRAPHICS, WILEY-BLACKWELL, OXFORD, vol. 38, no. 2, 7 June 2019 (2019-06-07), pages 393 - 403, XP071545474, ISSN: 0167-7055, DOI: 10.1111/CGF.13646**
• **RATHNAYAKE CHAMILA ET AL: "Image database with synchronized sensor data for vision based navigation systems", 2014 INTERNATIONAL CONFERENCE ON INDOOR POSITIONING AND INDOOR NAVIGATION (IPIN), IEEE, 27 October 2014 (2014-10-27), pages 421 - 425, XP033218033, DOI: 10.1109/IPIN.2014.7275511**
• **YUNIARTI ANNY ET AL: "Implementation of Reconstruction Filter to Create Motion Blur Effect in Urho3D Game Engine", 2018 INTERNATIONAL CONFERENCE ON COMPUTER ENGINEERING, NETWORK AND INTELLIGENT MULTIMEDIA (CENIM), IEEE, 26 November 2018 (2018-11-26), pages 198 - 203, XP033549032, DOI: 10.1109/CENIM.2018.8710947**

- MEREDIT-JONES RYAN: "POINT-SX~IPLIXG ,% LGORITH~IS FOR SI~C~UL.~\TING ~ ~ O T I O N BLUR", 1 January 2000 (2000-01-01), XP093032156, Retrieved from the Internet <URL:https://central.bac-lac.gc.ca/.item?id=MQ53389&op=pdf&app=Library&is_thesis=1&oclc_number=1006929850> [retrieved on 20230316]
- GARLAND MICHAEL ET AL: "A reconstruction filter for plausible motion blur", PROCEEDINGS OF THE ACM SIGGRAPH SYMPOSIUM ON INTERACTIVE 3D GRAPHICS AND GAMES, 9 March 2012 (2012-03-09), New York, NY, USA, pages 135 - 142, XP093032161, Retrieved from the Internet <URL:https://dl.acm.org/doi/pdf/10.1145/2159616.2159639> DOI: 10.1145/2159616.2159639
- FERNANDO NAVARRO ET AL: "Motion Blur Rendering: State of the Art", COMPUTER GRAPHICS FORUM : JOURNAL OF THE EUROPEAN ASSOCIATION FOR COMPUTER GRAPHICS, WILEY-BLACKWELL, OXFORD, vol. 30, no. 1, 26 January 2011 (2011-01-26), pages 3 - 26, XP071487665, ISSN: 0167-7055, DOI: 10.1111/J.1467-8659.2010.01840.X
- KLEIN G. S. ET AL: "A single-frame visual gyroscope", 1 January 2005 (2005-01-01), pages 53.1 - 53.10, XP055922886, ISBN: 978-1-901725-29-2, Retrieved from the Internet <URL:https://ecse.monash.edu/staff/twd/Research/KleinDrummond2005BMVC.pdf> DOI: 10.5244/C.19.53
- BROOKS TIM ET AL: "Learning to Synthesize Motion Blur", 2019 IEEE/CVF CONFERENCE ON COMPUTER VISION AND PATTERN RECOGNITION (CVPR), IEEE, 15 June 2019 (2019-06-15), pages 6833 - 6841, XP033686465, DOI: 10.1109/CVPR.2019.00700
- NELSON L MAX ET AL: "A two-and-a-half-D motion-blur algorithm", SIGGRAPH '85 CONFERENCE PROCEEDINGS : JULY 22-26, 1985, SAN FRANCISCO, CALIFONIA, ACM PRESS [U.A.], NY, US, 1 July 1985 (1985-07-01), pages 85 - 93, XP058342472, ISBN: 978-0-89791-166-5, DOI: 10.1145/325334.325188
- MICHAEL POTMESIL ET AL: "Modeling motion blur in computer-generated images", COMPUTER GRAPHICS, ACM, US, vol. 17, no. 3, 1 July 1983 (1983-07-01), pages 389 - 399, XP058244590, ISSN: 0097-8930, DOI: 10.1145/964967.801169

**Description**

TECHNICAL FIELD

The present disclosure relates to improvements for providing motion blur on still images. More particularly, it relates to methods and systems mobile devices to provide interactive motion blur.

BACKGROUND

Motion blur is an effect in photography typically caused by the movement of either the camera or the subject during the capturing of the picture. This effect is sometimes intentionally used to enhance the photograph, for example by showing motion or by emphasizing certain regions of the photograph over others or by creating an emotional feeling to the scene being depicted or to create some other artistic effect. Blur can also be artificially added to a photograph by post-processing of the image, such as with Photoshop™.

LANCELLE M ET AL: "Controlling Motion Blur in Synthetic Long Time Exposures" describes an offline method to create synthetic long-exposure motion-blurred images and videos from handheld video. It tracks features, stabilises frames on an object or background, interpolates frames using optical flow, applies optional enhancements (contrast, stylised streaks, super-resolution), and averages frames to produce images with a sharp subject and blurred surroundings. RATHNAYAKE CHAMILA ET AL: "Image database with synchronized sensor data for vision based navigation systems" describes building an image database that stores images together with synchronized IMU sensor data (accelerometer, gyroscope, magnetometer, etc.) and standard image metadata (EXIF). The database supports research on image processing, especially de-blurring and enhancement, and on navigation and wayfinding. IMU data can be used to estimate camera motion and corresponding blur for de-blurring or feedback.

SUMMARY

A system for adding interactive blur to images is provided by a mobile device decoding the image, where the movement of the mobile device translates to instructions for the decoder to selectively apply blur to the image. Metadata provided by the encoder side (sender of the image) can additionally control how the blur is applied. The decoder-side of the system can be implemented on a mobile device running any operating system, such as iOS™ or Android™.

An embodiment for achieving a method of providing interactive blur on an image viewed on a mobile device is described, the method comprising: measuring at least one sensor output from the mobile device; receiving metadata related to motion blur from an encoder; performing motion blur estimation based on the at least one sensor output and the metadata; selecting, from a filter bank and based on the motion blur estimation, at least one blur kernel for a corresponding pixel of the image; and applying blur on the image to produce a blurred image by using the at least one blur kernel at each corresponding pixel, wherein the applying blur comprises using an angle map to adjust blur direction at the corresponding pixel.

An embodiment for a decoder configured to perform the method is disclosed, said encoder comprising: an image decoder; a motion blur estimation module; a filter bank; and a blur application module.

An embodiment for an encoder configured to provide an image and metadata to the decoder is disclosed, the encoder configured to: encode the image to an encoded image; generate a depth map, a mask map, and an angle map for the image based on preferences; multiplex the encoded image, the depth mask, the mask map, and the angle map as output to the decoder.

BRIEF DESCRIPTION OF DRAWINGS

FIG. 1 illustrates an example decoder diagram for implementing immersive motion blur.
FIG. 2 illustrates an example flowchart for immersive motion blur.
FIG. 3 illustrates an example encoder diagram for supporting immersive motion blur.
FIG. 4 illustrates an example flowchart for getting a blur kernel from a filter bank.
FIG. 5 illustrates an example flow diagram of motion blur parameter estimation.
FIGs. 6A-6B illustrate examples of blur types based on device interaction.
FIG. 7 illustrates an example of a radial blur center.
FIG. 8 illustrates an example of a depth map with multiple radial blur centers.
FIG. 9 illustrates an example shifted image center for multiple radial blur centers.
FIG. 10 illustrates an example of bilinear weight derivation.

EP 4 449 341 B1

FIG. 11 illustrates an example of various maps used for interactive motion blur.

FIG. 12 illustrates an example blur vector map.

FIG. 13 illustrates an example of a modified strength map.

FIG. 14 illustrates an example flow diagram of blur application.

FIG. 15 illustrates an example of a ghosting artifact.

FIG. 16 illustrates an example of a blur kernel that overlaps the foreground.

FIG. 17 illustrates an example of foreground blur.

FIG. 18 illustrates an example process of processed masks for foreground blur.

FIG. 19 illustrates an example process for processing a depth map.

FIG. 20 illustrates example graphs for depth transfer functions for depth maps.

DETAILED DESCRIPTION

The method and systems herein describe a way to emulate blur on a still image sent to a mobile device, where the blurring is controlled by a combination of metadata and mobile device motion. Modern mobile devices typically include sensors, such as accelerometers, that detect how the device is moving while being held, both in direction of motion and speed of motion. Feedback from these sensors can provide intuitive instructions to the device on how to apply a blur effect on a picture. For example, a rapid sideways movement could be interpreted to apply a strong motion blur in the direction of the movement, whereas a slow forward (z-axis) motion could apply a slight radial blur. Metadata provided with the image (e.g., from the encoder) can control how different parts of the image (e.g., foreground, background) are blurred. In this way, the sender of the image can control what elements get blurred and what direction objects in the image should be seen to be moving, and the receiver of the image (the viewer) can control the type and strength of the blur. Additionally, further metadata can provide even further control for both the sender and viewer. Further processing can be performed to remove artifacts created by the blurring application.

As used herein, "blurring" refers to the manipulation of an image to emulate a smearing or fuzzy effect on the background and/or foreground of an image. "Motion blur" refers to a linear streaking blur to indicate motion in the still image. "Radial blur" refers to linear streaking blur radiating from a selected point (radial center) which can be in the image or outside the frame of the image. A motion blur can be thought of a special case of a radial blur where the radial center is at a far distance from the image (e.g., effectively at infinity) such that all streaks in the image are parallel. Types of blur include panning blur (e.g., unblurred foreground object with motion blur in the background), zoom blur (e.g., radially blurred foreground and background), and others.

As used herein, "mobile device" refers to any computing device that can be held, carried, or worn by a person and is capable of displaying/projecting an image. Examples include smartphones, tablet computers, smart glasses, smart watches, digital picture frames, wearable digital screens (e.g. integrate in clothing), etc. The device can be general use device with software ("app") loaded to implement the interactive blurring or be a device that is specifically designed to take advantage of interactive blurring which is implemented in software, hardware, and/or firmware. As used herein, the terms "user" and "viewer" are used interchangeably as the person using the mobile device to view the image. It is contemplated that some embodiments can have one person perform the movements of the mobile device (generating the interaction data) while another person views the screen, even though the probable typical use is having both functions being performed by a single person.

As used herein, the term "blur kernel" refers to a 2D low pass filter to be applied to portions of an image.

As used herein, a "module" is a component of hardware and/or software that performs a function.

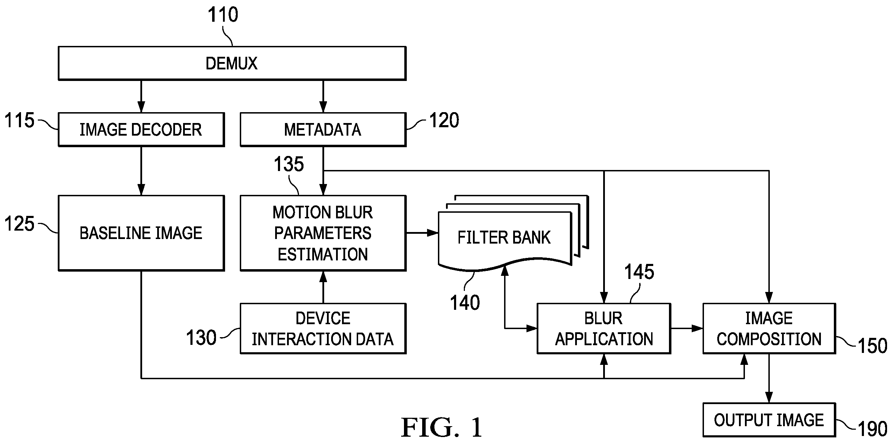

FIG. 1 shows an example implementation from the decoder (mobile device) side. The input from the sender is demultiplexed (demuxed) (110) into the image data to be decoded into a baseline image (125) by the decoder (115) and the metadata (120) to be used by the blur system modules (135, 145, 150). Device interaction data (130) (e.g., data from the mobile device regarding its motion) is sent to the motion blur parameters estimation module (135).

The motion blur parameters estimation module (135) receives the device interaction data (130) (e.g., velocity) and the related metadata (120) (e.g., depth information, expected blur direction, radial blur center offsets, etc.) as inputs and interprets them to output motion blur parameters. The parameters contain strength and direction information of the motion blur. The parameters are sent to the filter bank (140) to fetch appropriate blur kernels.

The blur application module (145) receives the blur parameters from the motion blur parameters estimation module (135) and uses it to load appropriate blur kernels from the filter bank (140). It also receives the baseline image (125), and related metadata (120) (e.g., background blur flag, mask map, etc.) as inputs and processes them to output data for the image composition module (150). In the case of simulating a foreground object blur, the blur application module (145) can also process a mask map using blur kernels so that a processed mask map can now cover the expanded area of a blurred foreground object. In this case, the processed mask map is also sent to the image composition module (150).

The image composition module (150) receives the baseline image (125), data from the blur application module (145) (e.g., a blurred image), and related metadata (120) (e.g., mask map, background/foreground blur flag, etc.) as inputs and uses them to compose the final output image (190) to be presented on the mobile device (e.g., viewed on a screen or projected).

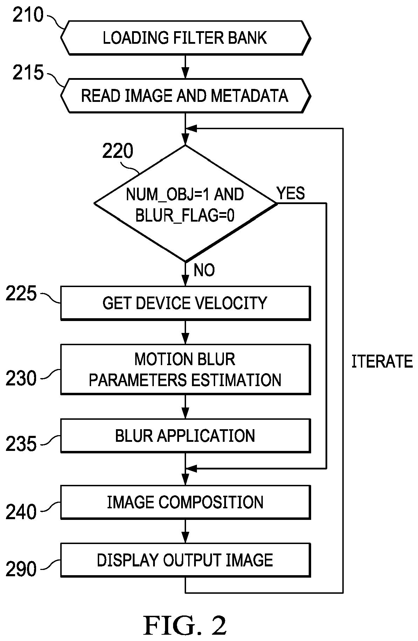

FIG. 2 shows an example flow diagram of a decoder with interactive blur. Once the decoder is initialized, it loads (210) the filter bank with blur kernels. This filter bank is constantly loaded on the memory so that the appropriate blur kernels can be fetched for any instance of device velocity. Then the decoder demultiplexes the bit stream received from the encoder and reads (215) the baseline image and metadata. The decoder checks relevant metadata to see if the encoder has specified not to perform any blur on the whole image (e.g., NUM_OBJ=1 & BLUR_FLAG=0; See Example Metadata herein). If true, the decoder goes right into the Image Composition module (240) where the baseline input image is displayed (290) as the output image. If false, then decoder reads (225) the device velocity and composes the final motion blurred image by going through the aforementioned three modules from FIG. 1: Motion Blur Parameters Estimation (230), Blur Application (235), and Image Composition (240). The procedure is repeated and a device velocity change results in a corresponding change in the output image, thus making the image responsive to the device movement in real time.

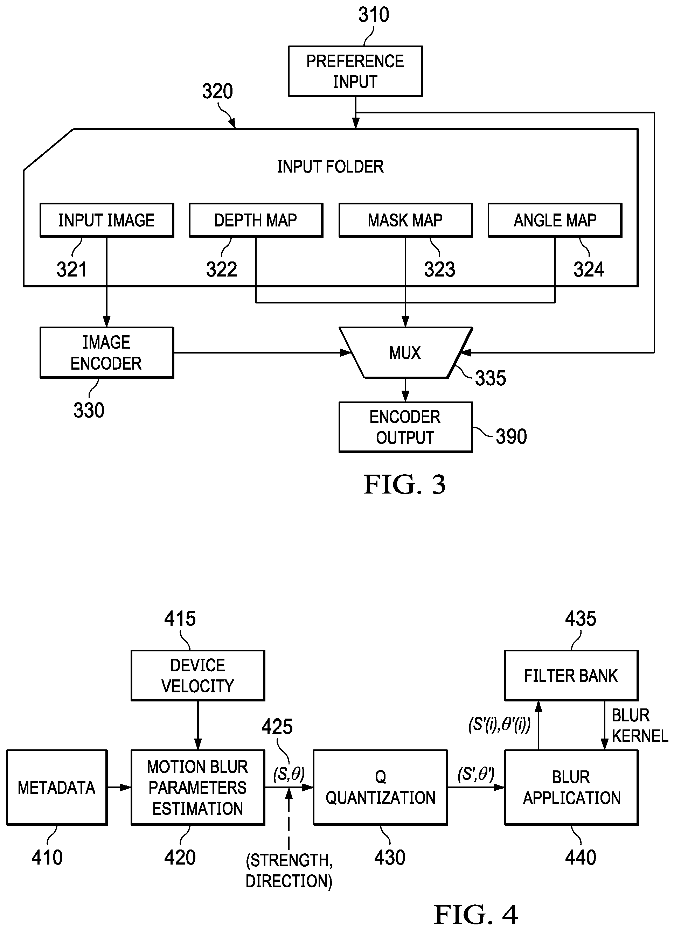

FIG. 3 shows an example of an encoder designed to support a decoder with interactive blur. This encoder generates a decoder-compatible bitstream. For example, in FIG. 3, the encoder receives a set of preference input (310), which can be set by the viewer and/or by the entity providing the image to the viewer, which is used to read various maps (322, 323, 324) and form metadata that can be interpreted on the decoder side. These maps, along with the input image (321) to be blurred can be presented in an input folder (320), where the image (321) is encoded (330) and the preference input (310), the maps (322, 323, 324), and the encoded image are multiplexed (335) into an output bitstream (390) which can then be used as input to the decoder. The maps can be generated using different algorithms depending on the desired level of accuracy, speed, and implementation complexity.

*Filter Bank Generation*

Filter bank generation requires a quantization of the blur strength and direction. Strength and direction of the motion blur can be denoted for i-th pixel as $S(i)$ and $\theta(i)$, respectively. $S(i)$ and $\theta(i)$ are subject to constant changes from changing device velocities over time. As generating blur kernels on-the-fly for a given $(S(i), \theta(i))$ every time is computationally expensive and redundant, pre-generate blur kernels corresponding to various combinations of $(S, \theta)$ and have it loaded on the memory.

For generating blur kernel from $(S, \theta)$, a motion blur method can be used, such as the one provided by MATLAB™ (see https://www.mathworks.com/help/images/ref/fspecial.html, "motion filter" section), where specifying strength and direction of the blur outputs a corresponding blur kernel. However, the motion blur method need not be constrained to this method, and any method that can reflect different levels of strength and direction of blur (e.g., 2D Gaussian kernels) can be used.

Different blur kernels may be called depending on $(S, \theta)$ given by the motion blur parameter estimation module. In some embodiments, all blur kernels are loaded on to the memory and kept there constantly so that the appropriate kernels can be fetched on-the-fly on a given $(S(i), \theta(i))$. Covering all possible blur kernels that can be generated from all combination of $(S, \theta)$ may be memory intensive. In some embodiments, instead of considering all combinations of $(S, \theta)$, one may desire to jump by a certain quantization step on each strength and direction to reduce the number of combinations. Of course, the quantization step may involve perceptual degradation, and therefore, a trade-off between the memory size and perceptual effect can be considered. In some embodiments, a step size for $\theta$ and S is given as $\theta_{step}$ and $S_{step}$, respectively, and $\theta_{step} = 6$ and $S_{step} = 2$ is used. The filter coefficients can be stored, for example, in unsigned 8-bit format. In some embodiments, quantized $(S, \theta)$ is $(S', \theta')$ where $\theta'$=0:**6**:180, S' = 0:2:150 (global MAX_BLUR), the total number of blur kernels is 2356, the number of kernel coefficients is ~5,789K, and the memory size is 1 Byte $\times$ 5,789K or ~ 5.8 MB.

After the decoder is initialized and the filter bank is loaded, the decoder then reads the metadata and the device velocity and sends them to the motion blur parameters estimation module. The module will output $(S, \theta)$ which is quantized to $(S', \theta')$ and sent to the blur application module. Here, the quantization is done by S' = $round(S/S_{step})$ and $\theta'$ = $round(\theta/\theta_{step})$. The blur application module fetches appropriate blur kernel for the i-th pixel from the filter bank using the information $(S'(i), \theta'(i))$.

FIG. 4 shows an example flowchart of fetching a blur kernel from the filter bank. After the decoder is initialized and the filter bank is loaded, the decoder then reads the metadata (410) and the device velocity (415) and sends them to the motion blur parameters estimation module (420). The module (620) will output the strength and direction parameters $(S, \theta)$ (425) which is quantized (430) to $(S', \theta')$ and sent to the blur application module (440). Here, the quantization is done by S' = $round(S/S_{step})$ and $\theta'$ = $round(\theta/\theta_{step})$. The blur application module fetches appropriate blur kernel for the i-th pixel from the filter bank (435) using the information $(S'(i), \theta'(i))$.

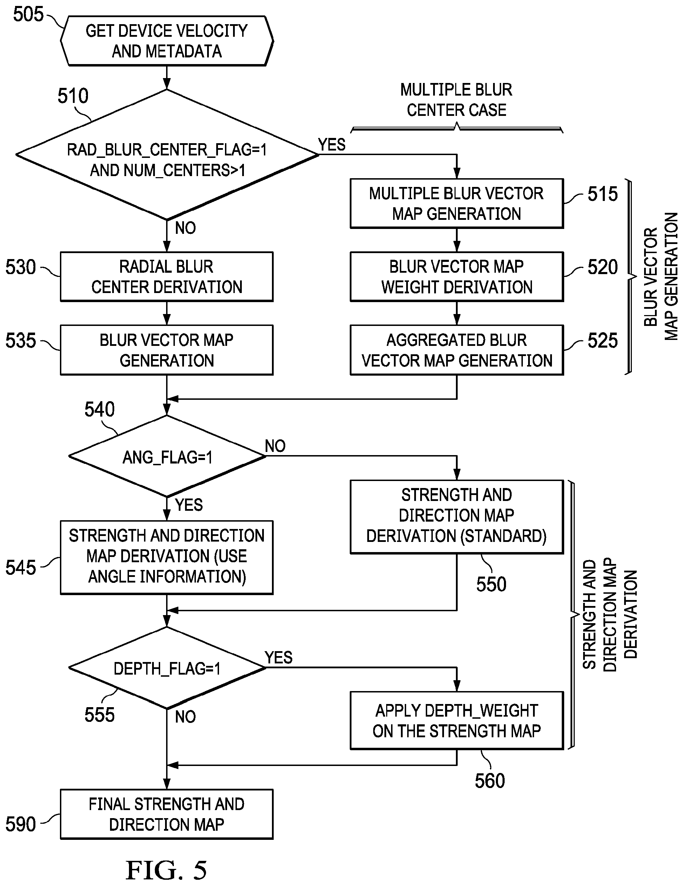

FIG. 5 shows an example flowchart for motion blur parameters estimation module. The motion blur parameters estimation module is the part of the decoder that interprets the portable device's velocity in conjunction with the provided metadata. The device velocity is processed from the readings of accelerometer sensor of device. The main role of this module is to generate blur parameters, e.g., blur strength and direction, for each pixel location. The output from this module can be a blur strength and direction map containing the parameter values for each pixel locations.

The motion blur parameters estimation module first collects (505) the device velocity readings and metadata, then, goes through two main operations which are 1) blur vector map generation and 2) strength & direction map derivation. There are two branches (510), based on the metadata (e.g., RAD_BLUR_CENTER_FLAG and NUM_CENTERS, to be further explained later in Section "Example Metadata."), in the blur vector map generation operation, where one is for the standard, single blur center case, and the other is for the multiple blur center case. The standard operation follows a procedure of first determining (530) the radial blur center through interpreting the device velocity in conjunction with the related metadata. Then, based on the determined radial blur center, generating (535) a blur vector map with vectors starting from radial blur center to each pixel locations. For the multiple blur center case, first generate (515) multiple blur vector maps from multiple blur centers specified by the encoder (through CENTER_COORDS). Then, derive (520) the weight to be applied on each blur vector maps, which is done through device velocity interpretation. Lastly, the weighted average on the blur vector maps is performed (525) to construct the final blur vector map. In either case, the output of this stage should be a single blur vector map. Then, the next operation utilizes this generated blur vector map to derive the final strength and direction map. In the process, the module checks whether the decoder has received any related metadata such as depth (555) and/or angle (540) information, and utilizes them (545, 560) if needed for generating the final strength and direction map (590). Otherwise, a standard map is derived (550).

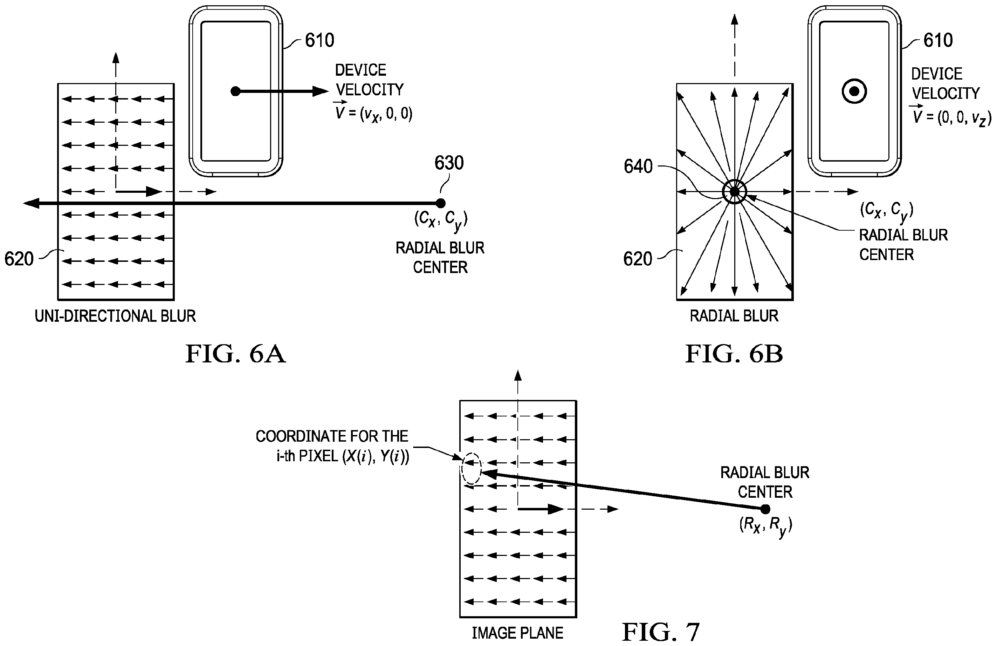

FIGs. 6A and 6B show example cases of velocity in different directions and corresponding expected blur directions.

Herein "x" refers to a direction axis "side-to-side" (horizontal) transverse motion with respect to the device screen (where the image is being shown), "y" refers to an "up-and-down" (vertical) transverse direction axis with respect to the device screen, and "z" refers to a "back- and-forth" direction axis normal to the device screen. Positive values will relate to "viewer's right, tangential to the screen" for x, "upwards in relation to the viewed image scene, tangential to the screen" for y, and "towards the viewer's face, normal to the screen" for z. Other conventions can be used with calculations adjusted accordingly.

FIG. 6A shows translational (planar) blur to occur in the direction opposite to the device (610) movement direction if the x (or y) direction dominates the device velocity. The planar blur (620) is created by placing the radial blur center (630) far from the image.

FIG. 6B shows a zoom blur which is presented as a radial blur occurring from the image center area (640) when the z component dominates the device (610) velocity.

There could also be hybrid blur which incorporates combination of these blurs. These various blur experiences can be simulated through controlling the radial blur location. For instance, in the case of simulating uni-directional (planar) blur, as in FIG. 6A, the system can send the radial blur center far away to the direction opposite the blur direction. By doing so, the vectors reached from the radial blur center to the plane of interest (image) will be uni-directional vectors in which the system can use the specified blur kernels for each pixel locations. In the case of simulating a radial blur, as in FIG. 6B, the system can locate the blur center near the image center so that the vectors reached from the blur center to each pixel location becomes directed radially.

Hybrid blur, which considers the combination of these blurs, can be also simulated by placing the radial blur center that is off-centered, depending on the velocity direction and amount. As can be seen here, interpreting the device velocity to locate the radial blur center is an important process to provide realistic interactive motion blur experiences.

Using this unified radial blur framework can be extended to more general cases. For example, different motion blur experiences can be provided by controlling the location of the radial blur center, which involves interpreting the relative contribution of each directional component of the velocity.

*Radial Blur Center Derivation*

Presented is an example of how to interpret the device velocity to locate the radial blur center, which in turn, determines the blur strength and direction for each pixel. Let the portable device's velocity given as $\vec{V} = (v_x, v_y, v_z)$. First define a velocity normalization factor $N$ given by

$$N = \sqrt{v_x^2 + v_y^2 + v_z^2}. \qquad (1)$$

Then we normalize the x and y component of the velocity as follows.

$$\hat{v}_x = \frac{v_x}{N} \qquad (2)$$

and,

$$\hat{v}_y = \frac{v_y}{N}. \qquad (3)$$

The normalized velocities, $\hat{v}_x$ and $\hat{v}_y$ captures the relative contribution of z direction velocity through the normalization factor $N$, which take effect in locating the radial center blur.

Denote the center of the radial blur as $R = (R_x, R_y)$. Then $R$ is defined as

$$\left(R_x, R_y\right) = \left(O_x + \beta_x \hat{v}_x, \ O_x + \beta_y \hat{v}_y\right). \qquad (4)$$

Here, $(O_x, O_y)$ refers to the offset coordinate set by the RAD_BLUR_CENTER_FLAG. (Note: A full description of example metadata flags used herein and their semantics are described in the Section "Example Metadata" later on).

$$\text{If RAD\_BLUR\_CENTER\_FLAG} = 0, \ (O_x, O_y) = (\frac{width}{2}, \frac{height}{2}).$$

$$\text{If RAD\_BLUR\_CENTER\_FLAG} = 1, \ (O_{x_c}, O_{y_c}) = \text{CENTER\_COORDS}[c],$$

where c ranges from 0 to NUM_CENTERS-1. CENTER_COORDS is specified from the encoder side. Note that in the case of multiple center coordinates (c > 1), equation (4) may not be used due to different velocity interpretation algorithm.

If RAD_BLUR_CENTER_FLAG = 2, $(O_x, O_y)$ is chosen to be the coordinate having minimum value from the DEPTH_WEIGHT, to take into account of the fact that the further away regions are highly likely to be the radial blur center. This is done by $(O_x, O_y) = argmin \{DEPTH\_WEIGHT(x, y)\}$.

The $\beta_x$ and $\beta_y$ refer to scaling factor applied to the normalized velocities $\hat{v}_x$ and $\hat{v}_y$, respectively, to control the sensitivity of the blur in each direction. More specifically,

$$\beta_x = \text{VL\_X} \times \max(height, width) \qquad (5)$$

and

$$\beta_y = \text{VL\_Y} \times \max(height, width), \qquad (6)$$

where VL_X and VL_Y are specified from the encoder side.

Revisiting the examples in FIGs. 6A and 6B, assume RAD_BLUR_CENTER_FLAG = 0, VL_X = 5, and VL_Y = 5. FIG. 6A covers the case of having a device velocity only in x direction, $(v_x, 0, 0)$. In this example, the radial blur center is sent to the far right as the viewer expects because, according to equation (4), the radial blur center becomes $\left(R_x, R_y\right) = (\frac{width}{2} + 5 \times \max(width, height), \frac{height}{2})$. This will give uni-directional blur on the image directed in horizontal left direction. For the case of FIG. 6B when there is a device velocity only in z direction, $(0, 0, v_z)$. This will give radial blur center of $\left(R_x, R_y\right) = (\frac{width}{2}, \frac{height}{2})$ according to equation (4), and thereby result in a radial blur as expected. Velocities with mixtures of x, y, and z directional components will give blur experiences somewhere in between these uni-directional and radial blur, depending on the relative contribution of each directional component captured by equations (2) and (3). The encoder can control the experience further by configuring VL_X and VL_Y to reduce or increase the sensitivity in certain directions.

FIG. 7 shows an example of blur vector map generation from a radial blur center and the image plane. Let $X(i)$ and $Y(i)$ denote coordinates of the $i$-th pixel in x and y axis, respectively. Then, the direction and strength of the blur of each pixel location is determined by computing vectors starting from the radial blur center to each pixel location. Denote the blur vector for the i-th pixel as $\vec{B}(i) = (b_x(i), b_y(i))$. Then,

$$\left(b_x(i), b_y(i)\right) = \left(X(i) - R_x, -1 \times \left(Y(i) - R_y\right)\right). \qquad (7)$$

Note that -1 is multiplied on the y component of the vector, due to the fact that most programming languages consider the +y direction on the y-axis of the image plane to point downwards as opposed to the definition used herein (+y being upward). The generated blur vector map $\vec{B}$ is passed on to the next operation.

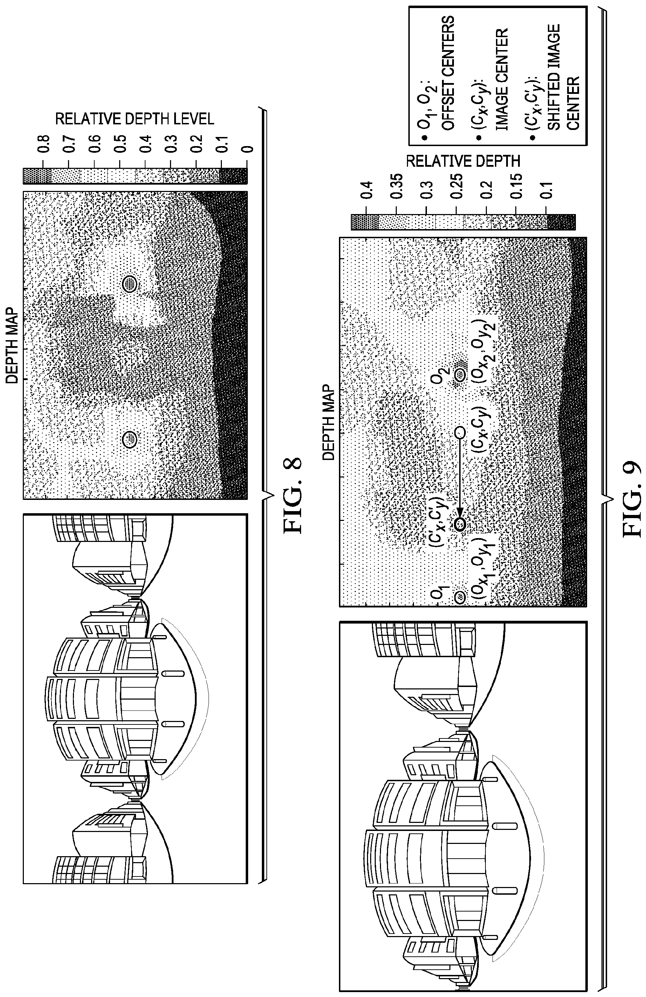

Metadata can be specified to have multiple blur center offset by having RAD_BLUR_CENTER_FLAG=1 and NUM_CENTERS>1. A representative scenario of where we may need such case would be an image with multiple far away regions as the one depicted in FIG. 8. These far away regions are likely to be radial blur centers. And we need to consider how blurs from those multiple centers interact on different device movements.

Now considering the expected motion blur behavior of the FIG. 8 case, if the user pulls the mobile device towards themself AND to the right at the same time, they are expecting a zoom blur experience into the left road. This means that the blur vectors from the left radial blur center is contributing more to the final motion blur. Conversely, pulling the device towards themselves AND to the left will let the right blur center to contribute more, thus simulating a zoom blur experience into the right road. Pulling the device exactly towards themselves will let the two blur centers to contribute to the result in a similar fashion to each other. To connect these blur experiences to the device velocity, first generate blur vector maps from those generated from each radial blur centers. Then, interpret the device velocity to determine which blur vector map contributes more. This information can be collectively used to generate the final blur vector map.

*Multiple Blur Map Generation*

Consider the case of NUM_CENTERS = 2. However, the algorithm is not restricted to NUM_CENTERS =2, and can also be extend to NUM_CENTERS > 2 cases. FIG. 9 depicts a scene with two far away regions.

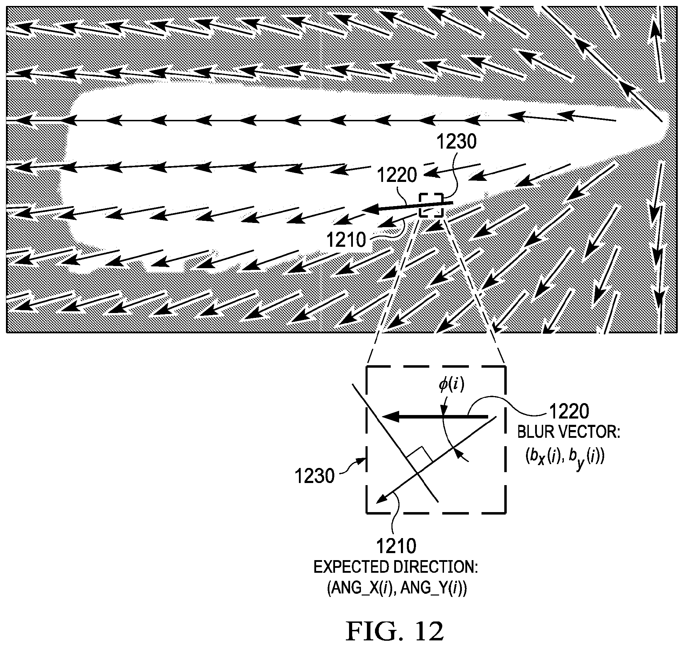

The module first reads the offset centers from the metadata CENTER_COORDS. Denote two (in our example) offset centers as $O_1$ and $O_2$. Then, $O_1 = (O_{x_1}, O_{y_1})$=CENTER_COORDS[0] and $O_2 = (O_{x_2}, O_{y_2})$=CENTER_COORDS[1]. Note that in FIG. 12, $O_1$ and $O_2$ are overlaid on the depth map. This is to convey that the CENTER_COORDS chosen in this example corresponds to the far away regions. But this does not mean that depth map or DEPTH_WEIGHT is required for multiple blur center experience. Specification of NUM_CENTER and CENTER_COORDS is sufficient.

After reading the offset centers from metadata, generate blur vector maps for each of the offset centers, which are denoted $\vec{B}_1$ and $\vec{B}_2$, for $O_1$ and $O_2$, respectively. This is done by using equation (7) where $(R_x, R_y)$ in the equation (7) becomes $(O_{x_1}, O_{y_1})$ and $(O_{x_2}, O_{y_2})$ for $\vec{B}_1$ and $\vec{B}_2$, respectively.

*Aggregating Blur Vector Maps*

Once $\vec{B}_1$ and $\vec{B}_2$ are generated, then the final vector map $\vec{B}$ is obtained through performing weighted sum of the vector maps as follows,

$$\vec{B} = \omega_1 \vec{B}_1 + \omega_2 \vec{B}_2. \tag{8}$$

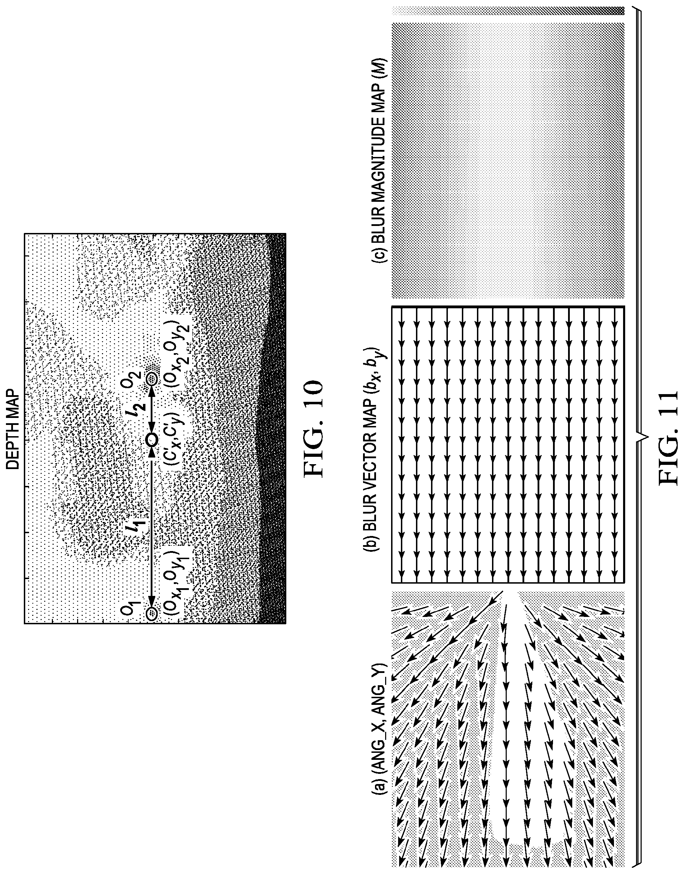

The weights $\omega_1$ and $\omega_2$ are determined based on each offset center's distance to the shifted image center ($C'_x$, $C'_y$). FIG. 10 depicts the distance of each offset center from the shifted image center ($C'_x$, $C'_y$) which is denoted as $l_1$ and $l_2$ for $O_1$ and $O_2$, respectively. Then the weight is determined using bilinear weighting where, $\omega_1 = l_2/(l_1 + l_2)$ and $\omega_2 = l_1/(l_1 + l_2)$.

The shifted image center ($C'_x$, $C'_y$) plays an important role in determining the weights for the blur vector maps. The ($C'_x$, $C'_y$) is computed as

$$\left(C'_x, C'_y\right) = \left(C_x - \beta_x \hat{v}_x, \ C_y - \beta_y \hat{v}_y\right). \tag{9}$$

The $\beta_x$ and $\beta_y$ here are defined the same way as in equation (5) and (6). This is using the device velocity to control the location of ($C'_x$, $C'_y$), thus controlling which offset centers contribute more to the final blur on a given device movements.

Making a device movement in only the z-direction (e.g., towards the user) will set ($C'_x$, $C'_y$) = ($C_x$, $C_y$) since $\hat{v}_x = 0$ and $\hat{v}_y = 0$. Because ($C'_x$, $C'_y$) is closer to $O_2$, blur vectors from $O_2$ will receive higher weights. Thus, the user will have a zoom blur experience to the right road. In the case of making a device movement in z-direction (towards the user) AND to the right, the system is shifting ($C'_x$, $C'_y$) to the left of ($C_x$, $C_y$) since $\hat{v}_x > 0$ and $\hat{v}_y = 0$. Now ($C'_x$, $C'_y$) is closer to $O_1$, and blur vectors from $O_1$ will receive higher weights. Thus, the user will have a zoom blur experience to the left road.

As was with the single blur center case, the generated aggregated blur vector map $\vec{B}$ from equation (8) is passed on to the next operation which is strength & direction map derivation.

*Strength and Direction Map Derivation*

Having received a blur vector map $\vec{B} = (b_x, b_y)$ from a previous operation (for either single or multiple blur center case), the next step is to derive a blur strength (S) and direction ($\theta$) map from it.

*Standard Method*

Unless ANG_FLAG=1, the standard method is used to compute strength and direction map. The direction ($\theta$) of the blur kernel for each i-th pixel location can be derived by

$$\theta(i) = \tan^{-1}\left(\frac{b_y(i)}{b_x(i)}\right). \tag{10}$$

For deriving the strength of blur kernel, first compute the normalized magnitude plane $\hat{M}$ of the vector plane $\vec{B}$ by

$$\hat{M} = \frac{M}{\max(M)} \tag{11}$$

where,

$$M(i) = \sqrt{b_x(i)^2 + b_y(i)^2}. \tag{12}$$

Then, compute the velocity magnitude factor $\hat{V}$ as

$$\hat{V} = \sqrt{\left(\frac{v_x}{\text{MAX\_VEL}[0]}\right)^2 + \left(\frac{v_y}{\text{MAX\_VEL}[1]}\right)^2 + \left(\frac{v_z}{\text{MAX\_VEL}[2]}\right)^2} \tag{13}$$

where MAX_VEL is specified from the encoder side.
The final strength (S) of the blur kernel for each i-th pixel location is computed by

$$S(i) = \hat{M}(i) \times \hat{V} \times \text{MAX\_BLUR}. \tag{14}$$

$\hat{M}$ is a plane with the dimension same as that of the image, where each location contain values ranging from 0 to 1. The values correspond to the normalized filter strength of each pixel location based on their distance from the radial blur center. The further the pixel is from the radial blur center, the stronger the blur strength. $\hat{V}$ is a scalar that accounts for the velocity magnitude and scales the blur strength accordingly, thus giving different levels of blur for a velocity of constant direction and changing magnitude. The MAX_BLUR is specified from the encoder which corresponds to maximum level of blur strength that can be reached for the current image, in which the value can be in the range of 0 to 150.

*Using Angle Information*

If ANG_FLAG=1, then the blur strength (S) and direction ($\theta$) can be derived differently than the standard method. This case indicates that the content provider (encoder) has also specified ANG_X and ANG_Y which contain expected blur direction for each pixel. Therefore, the direction ($\theta$) of the blur kernel for each *i*-th pixel location can be derived by

$$\theta(i) = \tan^{-1}\left(\frac{\text{ANG\_Y}(i)}{\text{ANG\_X}(i)}\right). \tag{15}$$

Though blur vector map $\vec{B}$ was not used for direction ($\theta$) map derivation, it can be used for deriving strength (S) map. FIG. 11 shows an example visualization of various related maps (angle map in panel (a), blur vector map in panel (b), and blur magnitude map in panel (c)), and FIG. 12 shows an illustration a vector from (ANG_X, ANG_Y) and $\vec{B}$ overlaid together. Thin arrows (1210) in FIG. 12 depict vectors specified by ANG_X and ANG_Y. The thick arrow (1220) in FIG. 12 corresponds to a vector obtained from blur vector map $\vec{B}$ which is obtained through device velocity interpretation. Especially, the thick arrow (1220) depicted in FIG. 12 corresponds to a vector ($b_x$, $b_y$) for the *i*-th pixel location indicated in the square. Originally, the vector ($b_x(i)$, $b_y(i)$) should have indicated the blur direction and strength of the pixel for current device velocity. However, now that the expected direction of the blur is specified, project ($b_x(i)$, ($b_y(i)$) to the direction given by (ANG_X($i$), ANG_Y($i$)) and only taking into account the magnitude in that direction component. If the angle formed by the two vectors ($b_x(i)$, ($b_y(i)$)) and (ANG_X($i$), ANG_Y($i$)) is denoted as $\phi(i)$, equation (12) can be modified to

$$M(i) = \sqrt{b_x(i)^2 + b_y(i)^2}\cos\big(\phi(i)\big). \qquad (16)$$

FIG. 11 panel (c) visualizes this $M$ map, where the region where the vectors from (ANG_X, ANG_Y) and ($b_x$, $b_y$) points in the same (or similar) direction has a larger magnitude. The rest of the (S) map computation is done by following equation (14).

*Applying DEPTH_WEIGHT*

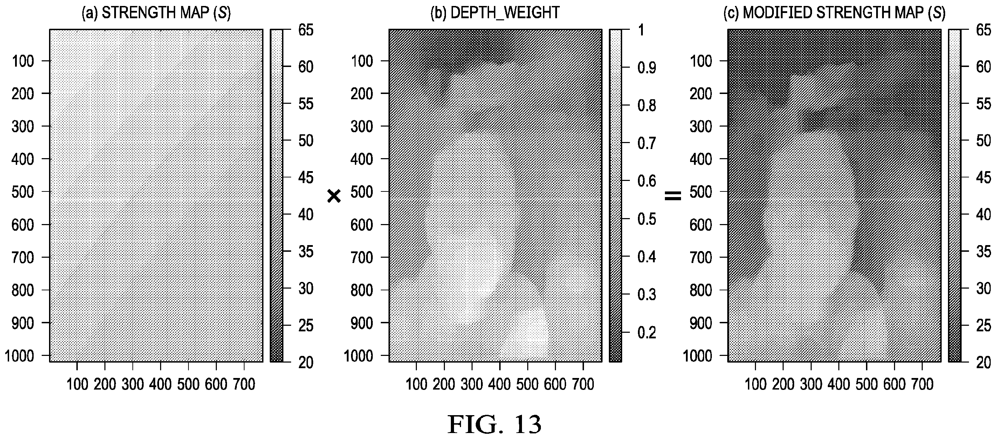

If DEPTH_FLAG=1, then the strength (S) map can be further modified using DEPTH_WEIGHT. This case indicates that the content provider (encoder) has indicated to use the depth information provided by the metadata parameter DEPTH_WEIGHT. The DEPTH_WEIGHT contains the weight to be the applied on the blur strength on each pixel location. The weight is determined based on the depth information, where smaller values can correspond to the further away regions which are less likely to be affected by motion blur. The modified strength for the i-th pixel is computed by S(i)×DEPTH_WEIGHT(i). FIG. 13 shows an illustration of how strength map (S) is modified, where the original strength map in panel (a) is scaled by DEPTH_WEIGHT in panel (b) to output the modified strength map, as shown in panel (c).
Through these series of operations, the final strength (S) and direction ($\theta$) map for current device velocity and metadata can be derived. These motion blur parameters are then passed on to the next step to generate a blurred image.

*Blur Application*

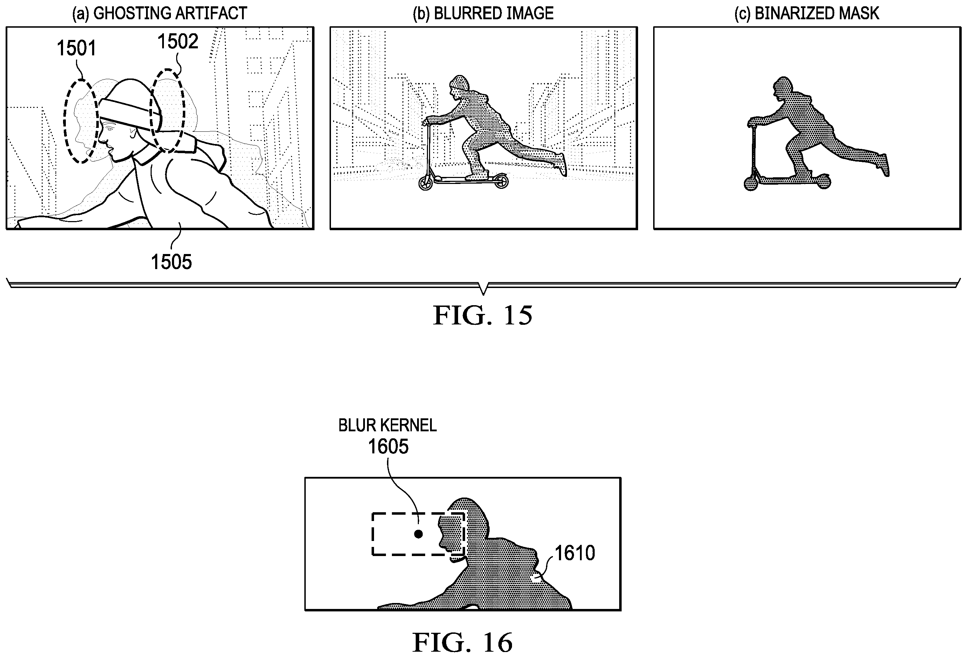

The output from the estimation module (S, $\theta$) can be quantized to (S', $\theta$') prior to being sent to the blur application module. The quantization can be done by $S' = round(S/S_{step})$ and $\theta' = round(\theta/\theta_{step})$. Example values are $S_{step} = 2$ and $\theta_{step} = 6$, respectively. The blur application module receives these quantized parameters (S', $\theta$') and uses them to load appropriate blur kernels from the filter bank. It also receives a baseline image and the related metadata (e.g., background blur flag) as inputs and process them to generate a blurred image and a processed mask map that are sent to the image composition module.

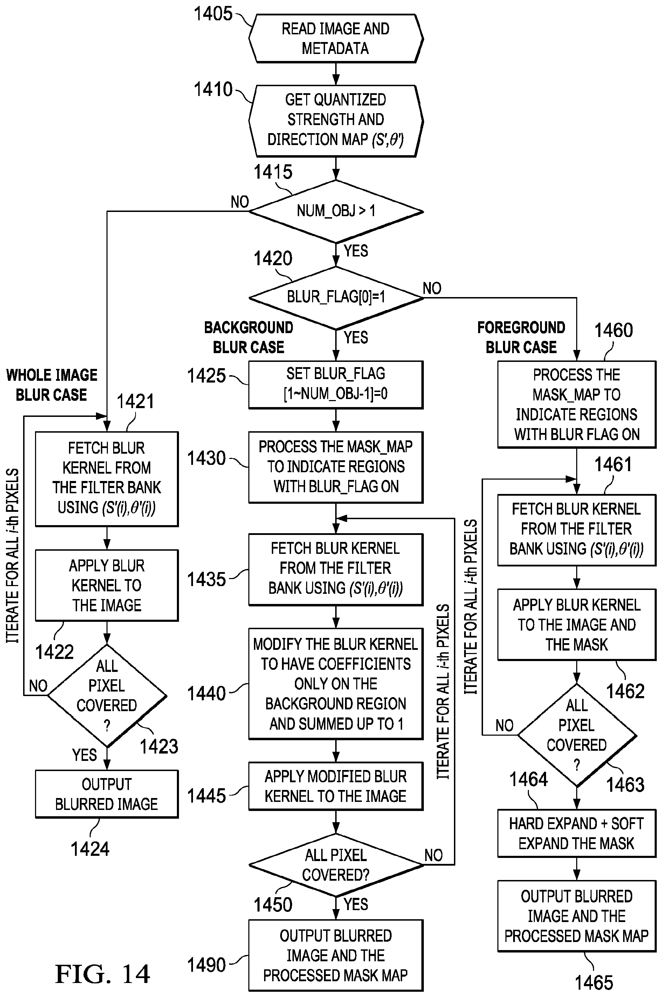

FIG. 14 shows an example flow diagram of the blur application module operations. The module first receives (1405) the baseline image, metadata, and receives (1410) the quantized direction map (S', $\theta$'). Then the module applies blur in a pixel-wise manner. The blur kernel for the i-th pixel of the baseline image is searched from the filter bank using the information (S'($i$), $\theta$'($i$)). Then dimension of the blur kernel is extracted, and the region subject to the convolution is identified. The corresponding image region is filtered to generate the blurred pixels. In some embodiments, if $S'(i) = 0$ *or* 1 the system can skip filtering.
There are largely three branches of operations depending (1420) on which type of motion blur experience is being handled and depending (1415) on if there are any foreground regions separate from the background.
First is the case of applying the blur on the whole image, where we simply apply (1422) the blur kernels to the whole image to generate the output blurred image (1424). If (1415) NUM_OBJ=1, then it indicates a whole image blur case. In such case, apply the blur kernels to the input image. First fetch (1421) an appropriate blur kernel for the i-th pixel from the filter bank using (S'($i$), $\theta$'($i$)) information. Then, get the image part subject to convolution and apply (1422) the blur kernel on the region to produce the blurred pixel response. The procedure is repeated (1423) until all pixel locations are covered.
Second is the case of applying a background blur, where additional operations are used to modify the blur kernel coefficient to prevent the foreground smearing artifact. If NUM_OBJ>1 (1415) and BLUR_FLAG[0]=1 (1420), then it indicates a background blur case, the background is to be blurred in accordance to the device movement while foreground objects remain unblurred. First set (1425) BLUR_FLAG [1~NUM_OBJ]=0 to remove any non-zero blur flags that were mistakenly given on the foreground object region. Then, process (1430) the MASK_MAP to derive a binarized map that indicates background region as value 1, and 0 otherwise. This binarized map is regarded as the processed mask map and will be used for blur kernel modification and is also sent to the image composition module. Next, fetch (1435) the appropriate blur kernel for the i-th pixel from the filter bank using (S'($i$), $\theta$'($i$)) information.
The blur kernel can then be modified (1440) to have its coefficients only in the background region and summed to 1 in order to avoid interference with foreground objects (see the discussion of "ghosting artifacts" below, referring to FIG. 15). The modified blur kernel is applied (1445) to the image. After all pixels are covered this way (1450), the blurred image is output (1490) with the processed mask map.
Third is the case of applying blur on the foreground object, where additional operations can be used to process the mask map and expand its foreground object masks in accordance with the device movement so that it can fully cover the blurred-out foreground pixels.

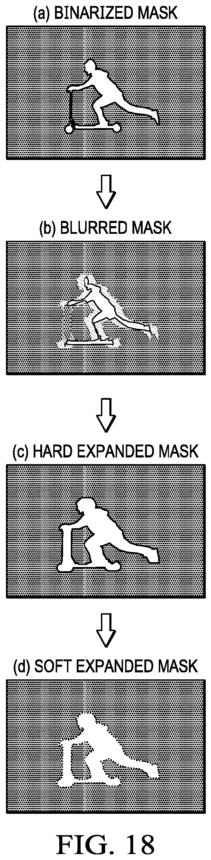

If the NUM_OBJ > 1 and BLUR_FLAG[n] = 1, where n are the indices of the foreground objects that the creators would like to have blurred, then the MASK_MAP is processed (1460) to indicate which regions of the image have the BLUR_FLAG set on. For each pixel, a blur kernel is fetched (1461) from the filter bank using the $(S'(i), \theta'(i))$ information. The blur kernel is applied (1462) to the image with the mask. After all pixels have been covered this way (1463) a hard expand followed by a soft expand is performed (1464) on the mask to create a natural blend of foreground and background in the blurred output image (1465) (see FIG. 18 described below).

*Ghosting Artifacts*

Applying the blur kernel as-is might create ghosting artifacts where a foreground object appears to be smearing out to the background. An example is shown in FIG. 15 where the foreground object (1505) is smeared into the left (1501) and right (1502) sides of the foreground region.

Applying the blur kernels to the image results in an image where everything is blurred, as shown in FIG. 15 panel (b). Since, in this example, BLUR_FLAG=[1,0] to indicate that only the background part will be blurred, so when composing the final image the regions corresponding to white regions from the binarized mask (FIG. 15 panel (c)), will take pixels from blurred image (FIG. 15 panel (b)) while the regions corresponding to black regions of the binarized mask will take pixels from the original image. However, since the blurred foreground object in panel (b) has smeared out to the background region indicated in white in panel (c), it appears as ghosting artifacts.

A solution to this is to modify the blur kernel in the cases of the blur kernel touching the foreground object locations. FIG. 16 illustrates an example where the blur kernel (1605) has touched the foreground region (1610) indicated in black. In such case, disregard any non-zero blur kernel coefficients in the foreground region. Then rescale the remaining coefficients in the background regions so that they sum up to 1. In the process, there should be a small positive number on the rescale denominator to prevent division by zero (this can happen when the blur kernel is entirely in the foreground region). A pseudo code for generating the modified blur kernel is provided below. Again, this modification of the blur kernel is toggled on only if NUM_OBJ>1 and BLUR_FLAG[0]=1, which corresponds to a background blur experience.

```
// Let F be the blur kernel coefficients, K is the binarized mask where the background pixel
has the value 1 and 0 other wise. Let F' be the modified blur kernel.
// Let m ~ n denote pixels subject to the convolution operation
// D: normalization factor. Initialized with a small positive number (eps) to prevent division by
zero
D = eps;
for (i = m; i<n+1; i++) {
        F'(i) = F(i) *K(i);
        D += F'(i); // collect coefficients for background regions for later normalization.
}
// normalize the coefficient so the sum of them is 1 to maintain the DC value.
F'=F'./D;
//Apply F' to the image region subject to convolution.
```

*Foreground Blur Case*

The encoder might provide motion blur only on the foreground object by specifying metadata as NUM_OBJ > 1 and setting BLUR_FLAG [n] = 1, where n are the indices of the foreground objects that the creators would like to have blurred. In such case, the foreground object can be blurred out of the foreground mask boundary.

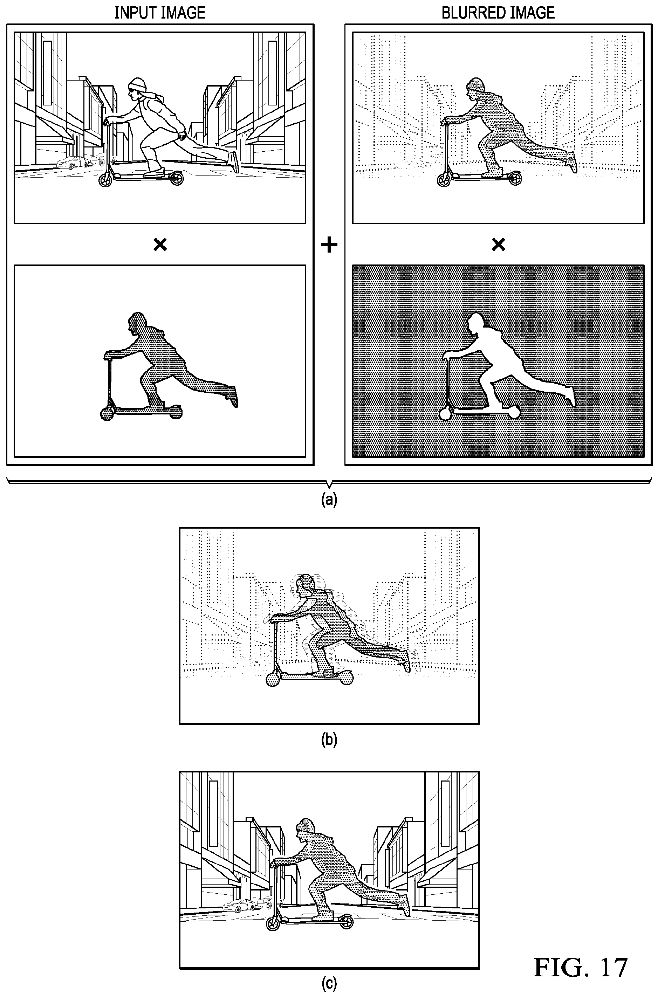

FIG. 17 shows an example of the issue of foreground blur case. Panel (a) shows the image composition process where input image and blurred image are applied by their respective masks. Only the regions indicated in white will be taken from each respective image. However, if the foreground mask indicated in white is overlayed onto the blurred image, as shown in panel (b), the blurred effect of the foreground object can expand out of the foreground mask boundary. Because of this, as seen in panel (c), the final composed image has the blurred effect of the foreground object that is beyond the foreground mask removed. This issue is solved by the operations as shown in FIG. 14.

FIG. 18 shows the visualization of the masks as each step. First generate a binarized mask that has the foreground object regions with BLUR_FLAG on as value 1, and 0 otherwise. Note that panel (a) shows an example of the image with one object (a scooter rider). But the binarized mask can also contain multiple foreground objects having value 1 if they have received BLUR_FLAG of 1. Then, apply the same blur kernels that are applied to the image to the binarized mask so that the non-zero values of the binarized map can also expand in the same amount as the blurred foreground object. An example of such blurred mask map is provided in panel (b). Then, perform a 'hard expand' operation on this blurred map where the map is binarized by having regions with non-zero values set to 1 (0 otherwise). The purpose of this hard expand operation is to expand the foreground mask so that if fully covers the blurred foreground objects. A visual example of hard expanded mask is in panel (c). Then, perform a 'soft expand' operation where a universal Gaussian blur filter is applied to the expanded mask. In this example, a 2D Gaussian filter with standard deviation of 5 is used. This soft expanded mask is sent to the image composition module as the final processed mask map. The purpose of this soft expand is to create a mask that enables more natural blending of the blurred foreground and the rest of the region in the later image composition stage. A visual example of soft expanded mask is in panel (d).

The pseudo code for the hard and soft expand operation is provided below.

```
// Let K denote blurred mask map
// Hard expand operation
M = K!=0; // setting non-zero values of the map as 1.
// Soft expand operation
M = M ⊛ g; // 2D gaussian is separable. Thus, convolve 1D Gaussian in each direction.
M = M ⊛ g';
```

The coefficients for the 1D Gaussian kernel g with standard deviation of 5 (in this example) can be generated in the following way.

```
σ =5;
halfFiltSize=ceil(2*sigma); // Full 2D filter size is 21×21 in the case of σ=5;
for (i=-halfFiltSize;i<halfFiltSize+1;i++){ // running from -10 to 10
```
$$g(i)=\frac{1}{\sqrt{2\pi}\sigma} \exp\left(-\frac{i^2}{2\sigma^2}\right);$$
```
}
```

The final image composition without the blending operation presents an unnatural visual artifact where the boundaries of the blurred foreground and the background appear discontinuous. However, by including the blending operation, there is a more natural rendering of the blurred foreground and background boundaries.

*Image Composition Module*

The image composition module receives the blurred image and processed mask map generated from the blur application module. It also receives baseline image and metadata and uses them to compose the final output image. Below are example cases of image compositions that can be signaled through different combination of metadata.

*1) Not applying any blur*

The encoder can choose to not apply any blur on the image. If such a case, the encoder can signal the metadata with, for example, BLUR_FLAG[0]=0.

If NUM_OBJ=1 then the decoder will treat the whole image as one object. In other words, there is no need to separate foreground objects from the background, and same operations (e.g., not applying blur) will be applied to the entire image.

By setting the BLUR_FLAG corresponding to the whole image as 0, the encoder has indicated that no operation would be performed on the image. Optionally, the image can include foreground objects and set the BLUR_FLAG for each foreground object also to 0, but this would be extra data to accomplish the same effect.

There is no need to send a MASK_MAP if NUM_OBJ=1.

*2) Apply blur on the whole image*

Encoder can choose to apply blur on the whole image by configuring the metadata similar to the "no blur on whole image" option, except that BLUR_FLAG[0]=1 (or, with foreground images, BLUR_FLAG[n]=1 for all n).

*3) Background blur*

If the image has a background and foreground object(s), the encoder can choose to apply blur only on the background by configuring the metadata in the following way:

Set NUM_OBJ= N (where N = the total number of foreground and background objects). This means that the decoder will treat the image to be composed as one background and (N-1) foreground objects.

Set BLUR_FLAG=[1, 0, 0, ..., 0] where the array is an N-by-1 array, the first element of the array corresponding to the background. By setting the BLUR_FLAG[0] = 1, the encoder has specified that the background will be blurred.

Send a MASK_MAP containing a label n ranging from 0 to (N-1) where locations with the label "0" corresponds to the background region and those with label n refers to the region corresponding to n-th object. This MASK_MAP is processed by the blur application module based on the BLUR_FLAG information, as described herein. Then, the resulting processed mask map is sent to the image composition module.

*4) Foreground blur*

If the image has a background and foreground object(s), the encoder can choose to apply blur only on foreground object(s) (all or subset) by configuring the metadata in the following way.

Set NUM_OBJ= N as in case 3).

Set BLUR_FLAG=[0, $f_1$, $f_2$, ... , $f_{N-1}$] (again an N-by-1 array). Let n be a label ranging from 1 to (N-1) which corresponds to the n-th foreground object. By setting the BLUR_FLAG[0] = 0 and BLUR_FLAG[$f_n$] = 1, the encoder has specified that the foreground objects having the flag value of 1 will be blurred. The BLUR_FLAG[$f_n$] can be a mix of 1 and 0, indicating that some (the "1"s) are to be blurred, but others (the "0"s) should not.

Send a MASK_MAP containing a label n ranging from 0 to (N-1) where locations with the label "0" corresponds to the background region and those with label n refers to the region corresponding to n-th object. This MASK_MAP is processed by the blur application module based on the BLUR_FLAG information, as described herein. Then, the resulting processed mask map is sent to the image composition module.

*Depth Map Information*

In 3D computer graphics and computer vision, a depth map is an image or image channel that contains information relating to the distance of the surfaces of scene objects from a viewpoint. In an embodiment, the syntax parameter DEPTH_WEIGHT (depth map metadata) can define a depth map of the image. This section describes how traditional depth map data, as generated by known in the art techniques, can be translated to DEPTH_WEIGHT metadata values for use with the present method.

*Converting a depth map to DEPTH_WEIGHT metadata*

Far away regions may have less magnitude of motion blur while closer regions can have more significant level blur. In such a case, the encoder can set DEPTH_FLAG = 1 and send the DEPTH_WEIGHT that will control the strength of the blur generated from the motion blur parameters estimation module. The DEPTH_WEIGHT is generated from the encoder side where it contains the weight to be the applied on the blur strength on each pixel locations. The weight is determined based on the depth information, where smaller values should correspond to the further away regions which are less likely to be affected by motion blur. The modified strength for the i-th pixel is computed by $S(i) \times$ DEPTH_WEIGHT(i).

While there may be cases of having an image and a corresponding ground-truth depth map ready, there may also be a need of generating the depth map from the given single image, as shown above.

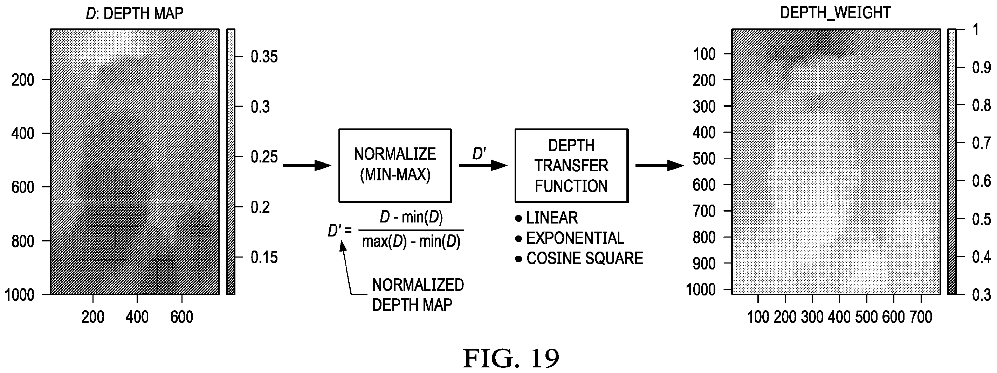

The depth map information is converted to DEPTH_WEIGHT and the sensitivity to different depth level can be controlled through configurations in the encoder side. In an example, assume that the depth map is provided along with an image (either ground-truth or generated). FIG. 19 shows the procedures for processing the depth map into DEPTH_WEIGHT. As depth map (D) obtained from different methods may contain different value ranges, apply min-max normalization to constrain the depth map value ranges from 0 to 1.

Then, this normalized depth map (*D'*) is subject to depth transfer function that will convert *D'* to DEPTH_WEIGHT. In the process, the encoder can specify which of the three transfer functions to use, which are:

- **Linear:** Normal transfer of *D'* into DEPTH_WEIGHT, where the equation is given by

$$\text{DEPTH\_WEIGHT} = 1 - D'.$$

- **Cosine square**: Making DEPTH_WEIGHT less sensitive to different depth levels, meaning that the blur strength will be reduced only for the significantly far regions. Equation is given by

-

$$DEPTH\_WEIGHT = \cos^2\left(\frac{\pi}{2.5} \times D'\right).$$

- **Exponential:** Making the DEPTH_WEIGHT more sensitive to different depth levels, meaning that the blur strength will be reduced even for slightly far away regions. Equation is given by

-

$$DEPTH\_WEIGHT = exp(-3 \times D').$$

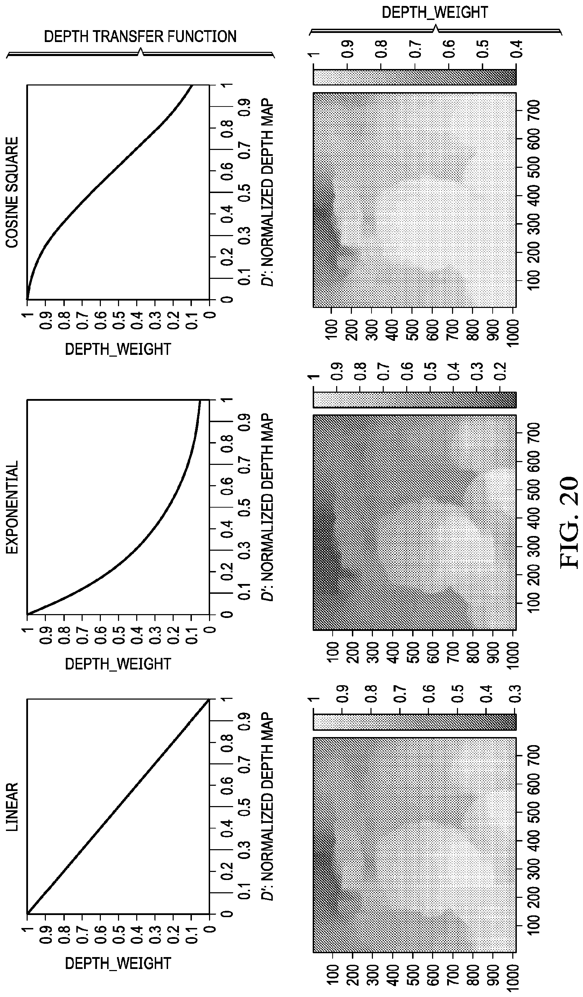

Figure 20 shows transfer function curves showing plots on *D'* vs. DEPTH_WEIGHT, along with the visualization of the DEPTH_WEIGHT map. Again, the encoder can configure which transfer function to use to generate DEPTH_WEIGHT based on the intent. If the encoder wants the blur strength to be less sensitive to different depth level, it can choose a cosine squared transfer function. It can choose an exponential function for more sensitivity, or a linear function for standard sensitivity.

This transfer computation need not be done on the decoder side. The encoder just needs to provide their available depth map along with the transfer function choice and DEPTH_FLAG=1. Then, the depth map min-max normalization and the transfer function computation can all be done on the encoder side and the resulting DEPTH_WEIGHT along with the DEPTH_FLAG=1 can be sent to the decoder side.

*EXAMPLES*

This section provides, without limitation, a variety of examples for defining metadata parameters as defined herein.

In Example 1, consider defining example metadata for applying to an image only background blur. For example, the image may include a person in the foreground posing in front of a motionless background (say a bridge). The encoder input configuration can be as follows:

```
NUM_OBJ = 2
        BLUR_FLAG = [1, 0]
RAD_BLUR_CENTER_FLAG = 0
DEPTH_FLAG = 1
        DEPTHTF = 1 (more sensitive to depth)
ANG_FLAG = 0
VL_X = 5
VL_Y = 5
MAX_BLUR= 65
MAX_VEL = [500,500,250]
```

This specifies that there is one background and one foreground through NUM_OBJ=2. Blurring only the background is specified by BLUR_FLAG = [1,0]. Sending the depth information (DEPTH_FLAG=1) ensures that the far away regions of the background will be blurred less to add realism to the motion blur.

Note that there is a parameter 'DEPTH_TF' that is not part of the metadata. DEPTH_TF refers to the transfer function to be applied to convert the depth map into the DEPTH_WEIGHT. The values can be one of -1, 0, and 1 where each refers to cosine squared (less sensitive), linear (standard sensitivity), and exponential (more sensitive) functions. Having less sensitivity means that it is less sensitive to different depth levels, and thus, will reduce the blur strength only for the significantly far away regions. This transfer computation does not need to be done on the decoder side. Therefore, it can be taken care of at the encoder side and only the final output DEPTH_WEIGHT is sent as the metadata.

*Configured Metadata*

```
NUM_OBJ = 2
    BLUR_FLAG = [1, 0]
    MASK_MAP
RAD_BLUR_CENTER_FLAG = 0
DEPTH_FLAG = 1
    DEPTH_WEIGHT
ANG_FLAG = 0
VL_X = 5
VL_Y = 5
MAX_BLUR= 65
MAX_VEL = [500,500,250]
```

This is the configured metadata (for this example) that will be sent from the encoder to the decoder side for motion blur computation. The creator (encoder side) would need to have any required metadata maps ready on the same folder as the input image so that they are called into the metadata when flagged from the encoder input configuration. In this example, the MASK_MAP and DEPTH_WEIGHT was loaded and sent to the decoder.

*Device velocity configuration*

In this example, the device's velocity magnitude is increased linearly until it reaches MAX_VEL in its respective direction. For this example, the direction of the velocity is set as diagonal (progressing in both x and y direction). The background blur will therefore happen in a diagonal direction, where a higher magnitude of velocity gives a higher level of blur.

The background blur is observed in the diagonal direction where higher magnitude motion yields higher level of motion blur. Also, the regions which are indicated as the far away region from the DEPTH_WEIGHT is affected less by the motion blur.

In Example 2, consider an example metadata map for an object with horizontal motion blur (say, a skater or a car moving into the foreground) The encoder input configuration can be as follows:

```
NUM_OBJ = 2
    BLUR_FLAG = [1, 0]
RAD_BLUR_CENTER_FLAG = 0
DEPTH _FLAG = 1
    DEPTH TF = 1
ANG_FLAG = 1
VL_X = 5
VL_Y = 5
MAX_BLUR= 65
MAX_VEL = [500,500,250]
```

In this image example, the encoder is expecting horizontal movement of the foreground (e.g., the scooter rider), therefore, simulating panning blur on this sequence should give motion blur on the background happening in horizontal direction. Therefore, the encoder sets ANG_FLAG=1 and provides an angle map that provides an expected blur direction pointing to the left.

*Configured Metadata*

```
NUM_OBJ = 2
    BLUR_FLAG = [1, 0]
    MASK_MAP
RAD_BLUR_CENTER_FLAG = 0
DEPTH_FLAG = 1
    DEPTH_WEIGHT
ANG_FLAG = 1
    ANG_X
    ANG_Y
VL_X = 5
VL_Y = 5
MAX_BLUR= 65
MAX_VEL = [500,500,250]
```

*Device velocity configuration:*

For this example, have the mobile device motion set the direction of the input velocity as diagonal (progressing in both x and y direction). However, in this case, as the angle map metadata has specified (ANG_X, ANG_Y) pointing to the horizontal (left) direction, the decoder will project its blur interpretation to this metadata set direction, thus, giving a background blur occurring only in the horizontal direction.

Background blur is observed in the horizontal direction despite the device providing diagonal input velocities, as expected.

In Example 3, consider an example of metadata map visualization for another object with motion blur in the foreground over a background with large image depth variation (say, a moving train coming towards the camera holder). The encoder input configuration can be as follows:

```
NUM_OBJ  = 2
    BLUR_FLAG = [0, 1]
RAD_BLUR_CENTER_FLAG = 0
DEPTH_FLAG = 1
    DEPTH_TF = 1
ANG_FLAG = 1
VL_X = 5
VL_Y = 5
MAX_BLUR= 65
MAX_VEL = [500,500,250]
```

With the corresponding configured metadata being:

```
NUM_OBJ  = 2
    BLUR_FLAG = [0, 1]
    MASK_MAP
RAD_BLUR_CENTER_FLAG = 0
DEPTH_FLAG = 1
                DEPTH_WEIGHT
ANG_FLAG = 1
    ANG_X
    ANG_Y
VL_X = 5
VL_Y = 5
MAX_BLUR= 65
  MAX_VEL = [500,500,250]
```

*Visualization of metadata maps:*

In this example, it is expected that (ANG_X, ANG_Y) on the foreground region will be set so that the direction matches the direction where the foreground object (say, a train) is headed.

*Device velocity configuration:*

For this example, the mobile device motion sets the direction of the input velocity as horizontal, progressing in +x direction. This should originally shape the blur to be unidirectional, pointing to the left. However, since the encoder has specified the direction of the foreground object (train) through (ANG_X, ANG_Y), the train will be blurred in the direction where it is headed.

As intended, the foreground object (train) is blurred in the direction where the train is headed even though the device made a purely horizontal device movement. The blur magnitude on the closer part of the train is larger compared to that on the far away part of the train, which is the expected experience. This was achieved by having DEPTH_FLAG=1 and applying DEPTH_WEIGHT to the blur strength. This is a good example of how various metadata map contributes to adding realism to the motion blur experience.

*Example Metadata*

The metadata can be used to provide instructions to the decoder on how to apply the blur.

For example, the metadata can include object information to separate the image into one or more foreground regions (e.g., objects) and a background region. Each object can have a "blur flag" to indicate if the region is to be blurred or not (e.g., "0" = do not blur, "1" = apply blur) and a mask map to identify which pixels are associated with which objects. For example, the metadata can contain "NUM_OBJ", "BLUR_FLAG[n]", and "MASK_MAP[i][j]" metadata.

In this example, NUM_OBJ specifies the number of objects that the encoder would like to consider separately for the input image. In this example the value is an integer greater than 0. The value of 1 indicates that the whole image is considered as one object and the blur will be applied (or not) on the whole image, depending on the BLUR_FLAG. A NUM_OBJ value greater than 1 can indicate that there is one background and NUM_OBJ - 1 foreground objects that could be considered separately. The default value can be 1.

In this example, BLUR_FLAG[n] specifies which objects are subject to blurring. The value n ranges from 0 to NUM_OBJ-1, and the BLUR_FLAG for each n contains a flag indicating whether to blur the corresponding region or not. The value of the BLUR_FLAG for each n can be 0 or 1, where 1 indicates the region is subject to blur while 0 indicates it is not. The first entry of the parameter, BLUR_FLAG[0], corresponds to the flag for the background, while the following entries correspond to that of each the foreground objects (if any). The encoder may configure to blur the background by having BLUR_FLAG[0]=1 while having the other entries as zero. The encoder may also configure to blur all (or subset) of foreground objects by having BLUR _FLAG[0]=0 while having all (or subset) the rest of entries as one. Blurring the whole image can be achieved by having NUM_OBJ=1 and BLUR_FLAG[0]=1. Maintaining the original image can be achieved by having NUM_OBJ=1 and BLUR_FLAG[0]=0. The default value can be BLUR_FLAG=[0].

In this example, **MASK_MAP[i][j]** specifies which object the pixel (i, j) corresponds to. It is the object ID map specifying which image region corresponds to which object. The value for each pixel location can be an integer n ranging from 0 to NUM_OBJ-1, where each value serves as a label for the MASK_MAP. The pixels having value of 0 correspond to the background region, and the pixels having value n correspond to regions indicating n-th object. In some embodiments, the MASK_MAP is sent only if NUM_OBJ > 1. The default option can be to not send the map.

The metadata can include information about the radial blur center or centers.

A RAD_BLUR_CENTER_FLAG can specify which offset coordinate(s) are to be used for determining the radial blur center(s). More specifically, the radial blur center is determined by adding some shift amount, which is dependent on the portable device movement, on the offset coordinates. The details of how the radial blur center is determined was provided earlier in this disclosure. The value of RAD_BLUR_CENTER_FLAG shall be 0, 1, or 2. A value of 0 indicates that the offset coordinate is chosen to be the image center, given as (width/2, height/2). A value of 1 indicates that the offset is chosen to be the center specified in the metadata, where relevant information will be further provided through the metadata NUM_CENTERS and CENTER_COORDS. A value of 2 indicates that the one offset coordinate will be extracted from DEPTH_WEIGHT. This choice assumes DEPTH _FLAG=1, and choses a single coordinate having arg MIN(DEPTH_WEIGHT) to take into account the fact that "further away" regions are highly likely to be the radial blur center. The default value of this metadata is 0.

NUM_CENTERS specifies the number of offset coordinates given by the encoder. The value can be any integer greater or equal to 1. The default is not to send the parameter.

CENTER_COORDS[c] specifies the c-th center coordinates specified by the encoder. The value c ranges from 0 to NUM_CENTERS-1, and CENTER_COORDS for each c contains two entries corresponding to the column and row coordinates of the offset. The dimension of CENTER_COORDS is $2\times$ NUM_CENTERS. The default is not to send the parameter.

The metadate information can include depth information. This metadata group enables controlling the strength of the blur based on the depth information, letting the users to have more realistic motion blur experiences.

DEPTH_FLAG specifies the usage of depth map information. The value can be 0 or 1. The value of 0 indicates that depth related information is not being sent. The value of 1 indicates that a DEPTH_WEIGHT that contains the depth information is being sent. The default value is 0.

DEPTH_WEIGHT[i][j] specifies the weight (scaling factor) to be applied on the blur strength on each pixel location (i, j). The weight is determined based on the depth map information. The value for each pixel location can be in the range of 0 to 1, where smaller values correspond to the further away regions which are less likely to be affected by motion blur. The DEPTH_WEIGHT can be derived from the encoder with the DEPTH_WEIGHT sent to the decoder through metadata. This DEPTH_WEIGHT can be derived by applying a transfer function on the depth map information. However, this can be later changed to storing the depth map and the signal for the transfer function in the metadata. This is because the framework can be extended to include other interactive experiences, and in such case, depth map information may be needed on the decoder. The default option of this metadata is not to send the map.

The metadata can include information about the direction (angle) of the motion blur. This is useful if there is an expected direction of motion in the image (e.g., a moving train).

ANG_FLAG specifies the usage of angle map information. The value can be 0 or 1. The value of 0 indicates the expected blur direction information is not sent. The value of 1 indicates that the expected blur direction information is sent through parameters ANG_X and ANG_Y. The default value is 0.

ANG_X[i][j] specifies the x component of the expected direction vector of (i, j) pixel. The ANG_X is sent only if ANG_FLAG=1. The default option is not to send the map.

ANG_Y[i] [j] specifies the y component of the expected direction vector of (i, j) pixel. The ANG_Y is sent only if ANG_FLAG=1. The default option is not to send the map.

Other data can also be included in the metadata, such as:

MAX_BLUR specifies the maximum level of blur that can be reached for this image through portable device movement. The value can be in a range, for example 0 to 255, where the unit can be in pixels. A default value can be set, e.g., 65.

MAX_VEL[m] specifies the maximum level of velocity values (e.g., in m/s SI units) that can be reached through portable device movement for each axis. The value m ranges from 0 to 2 where each corresponds to x, y, and z axis, respectively. This MAX_VEL serves as normalization factor for the velocity interpretation, and thus, controls the sensitivity of the blur to the portable device movement. Note that each device may have different value ranges. The default value can be e.g., [500, 500, 250].

VL_X specifies the sensitivity of the device movement in x direction with respect to other (y and z) directions, where higher value indicates higher sensitivity. The value may be any non-negative number. The recommended value for normal experiences is VL_X = 5. One can also set VL_X = 0 to restrict the blur response only to y and z directional movements. An example default value can be VL_X=5.

VL_Y specifies the sensitivity of the device movement in y direction with respect to other (x and z) directions, where higher value indicates higher sensitivity. The value may be any non-negative number. The recommended value for normal experiences is VL_Y = 5. One can also set VL_Y = 0 to restrict the blur response only to x and z directional movements. Both VL_X and VL_Y can be set to zero to restrict the blur only in z directional movements, for example, in case of simulating a zoom blur. An example default value can be VL_Y=5.

Maps can be sent by any appropriate compression algorithm as would be known in the art.

EEE1: A method of providing interactive blur on an image viewed on a mobile device comprising: measuring at least one sensor output from the mobile device; receiving metadata related to motion blur from an encoder; performing motion blur estimation based on the at least one sensor output and the metadata; selecting, from a filter bank and based on the motion blur estimation, at least one blur kernel for a corresponding pixel of the image; and applying blur on the image to produce a blurred image by using the at least one blur kernel at each corresponding pixel, the applying using angle map to adjust blur direction at the corresponding pixel.

EEE2: The method of EEE 1, further comprising: performing image composition on the blurred image to produce an output image.

EEE3: The method of any of EEEs 1 or 2 further wherein the applying blur further comprises using a depth map to adjust blur strength at each corresponding pixel.

EEE4: The method of any of EEEs 1 to 3, further comprising using a mask map to separate foreground objects from a background object, the applying blur being selectively performed on foreground and background objects based on the metadata.

EEE5: The method of any of EEEs 1 to 4 further comprising determining the number of radial blur centers from the metadata and, if there are more than one radial blur center, generating multiple blur vector maps, deriving blur vector map weights, and aggregating the multiple blur vector maps to create an aggregate blur vector map used for the applying blur.

EEE6: The method of any of EEEs 1 to 5 wherein the sensor output comprises velocity data related to a movement of the mobile device.

EEE7: The method of any of EEEs 1 to 6, further comprising deriving a radial blur center based on the metadata.

EEE8: The method of EEE 7, further comprising generating a blur vector map based on the radial blur center.

EEE9: The method of any of EEEs 1 to 8, further comprising determining, from the metadata, if an entirety of the image is to be blurred, only background regions of the image are to be blurred, or if foreground images are to be blurred.

EEE10: The method of EEE 9, further comprising generating an aggregated blur vector map based on the blur vector map and derived blur vector map weights.

EEE11: The method of any of EEEs 1 to 10, further comprising generating a strength and direction of motion blur map based on the metadata.

EEE12: The method of any of EEEs 1 to 11, further comprising modifying the blur kernel to have coefficients only in a background region of the image.

EEE13: The method of any of EEEs 1 to 12, further comprising receiving a mask map of a background region of the image and one or more foreground images, the mask map being identified in the metadata.

EEE14: The method of any of EEEs 1 to 13, wherein the motion blur estimation includes using a mask map masking between foreground objects and background in the image.

EEE15: The method of any of EEEs 1 to 14, wherein the motion blur estimation includes using a depth map providing blur weighting values.

EEE16: The method of any of EEEs 1 to 15, wherein the angle map is used to apply scaling factors that control sensitivity of the blur in each direction.

EEE17: The method of any of EEEs 7 to 16, further comprising computing vectors from the radial blur center to each pixel location.

EEE18: The method of any of EEEs 8 to 17, wherein a strength of each blur kernel of the at least one blur kernel is computed as a combination of a normalized filter strength of the corresponding pixel, a velocity magnitude, and a maximum blur value.

EEE19: The method of EEE 18, wherein the normalized filter strength is computed from the blur vector map.

EEE20: A decoder configured to perform the method of any of EEEs 1 to 17, said encoder comprising: an image decoder; a motion blur estimation module; a filter bank; and a blur application module.

EEE21: The decoder of EEE 20 further comprising an image composition module.

EEE22: An encoder configured to provide an image and metadata to the decoder of any of EEEs 20 or 21, the encoder configured to: encode the image to an encoded image; generate a depth map, a mask map, and an angle map for the image based on preferences; multiplex the encoded image, the depth mask, the mask map, and the angle map as output to the decoder.

EEE23: The encoder of EEE 22 further configured to provide metadata related to the interactive blurring to the decoder.

EEE24: The encoder of any of EEEs 22 or 23, the encoder being further configured to convert the depth map to depth weight metadata using a transfer function.

EEE25: The encoder of EEE 24, wherein the transfer function is one of linear, cosine square, or exponential.

EEE26: The mobile device configured to perform the method of any of EEEs 1 to 20, the mobile device comprising a screen and at least one sensor configured to measure a velocity of the mobile device.

EEE27: The mobile device of EEE 26, wherein the sensor is an accelerometer.

EEE28: The mobile device of any of EEEs 26 or 27 wherein the mobile device is any of a smartphone, a tablet computer, or a smart watch.

*References* related to image blur, all incorporated by reference herein:

[1] Motion Blur: en.wikipedia.org/wiki/Motion_blur

[2] www.nyfa.edu/student-resources/how-to-motion-blur-photography/

[3] Motion blur method (MATLAB): www.mathworks.com/help/images/ref/fspecial.html, "motion filter" section.

**Claims**

1. A method of providing motion blur on an image viewed on a mobile device comprising:

    measuring at least one sensor output from the mobile device;
    generating motion blur parameters based on the at least one sensor output and metadata provided with the image;
    selecting, from a filter bank and based on the motion blur parameters, at least one blur kernel for a corresponding pixel of the image;
    applying blur on the image to produce a blurred image by using the at least one blur kernel at each corresponding pixel;
    performing image composition on the blurred image to produce an output image; and
    presenting the output image on the mobile device,
    wherein the at least one sensor output comprises velocity data related to a movement of the mobile device.

2. The method of claim 1, further comprising repeating the procedure to make the output image responsive to changes in the at least one sensor output over time.

3. The method of claim 1 or claim 2, wherein the applying blur comprises using an angle map to adjust blur direction at the corresponding pixel.

4. The method of any of claims 1 to 3, wherein the applying blur further comprises using a depth map to adjust blur strength at each corresponding pixel.

5. The method of any of claims 1 to 4, further comprising using a mask map to separate foreground objects from a background object, the applying blur being selectively performed on foreground and background objects based on the metadata.

6. The method of any of claims 1 to 5, further comprising determining the number of radial blur centers from the metadata and, if there are more than one radial blur center, generating multiple blur vector maps, deriving blur vector map weights, and aggregating the multiple blur vector maps to create an aggregate blur vector map used for the applying blur.

7. The method of any of claims 1 to 6, further comprising deriving a radial blur center based on the metadata.

8. The method of claim 7, further comprising generating a blur vector map based on the radial blur center.

9. The method of any of claims 1 to 8, further comprising determining, from the metadata, if an entirety of the image is to be blurred, only background regions of the image are to be blurred, or if foreground images are to be blurred.

10. The method of claim 9, further comprising generating an aggregated blur vector map based on the blur vector map and derived blur vector map weights.

11. The method of any of claims 1 to 10, further comprising generating a strength and direction of motion blur map based on the metadata.

12. The method of any of claims 1 to 11, further comprising modifying the blur kernel to have coefficients only in a background region of the image.

13. The method of any of claims 1 to 12, further comprising receiving a mask map of a background region of the image and one or more foreground images, the mask map being identified in the metadata.

14. The method of any of claims 1 to 13, wherein generating the motion blur parameters includes using a mask map masking between foreground objects and background in the image.

15. The method of any of claims 1 to 14, wherein generating the motion blur parameters includes using a depth map providing blur weighting values.

## Patentansprüche

1. Verfahren zum Bereitstellen von Bewegungsunschärfe in einem auf einer mobilen Vorrichtung betrachteten Bild, umfassend:

Messen mindestens eines Sensorausgangs der mobilen Vorrichtung;
Erzeugen von Bewegungsunschärfeparametern basierend auf dem mindestens einen Sensorausgang und mit dem Bild bereitgestellten Metadaten;
Auswählen von mindestens einem Unschärfekern für ein entsprechendes Pixel des Bildes aus einer Filterbank basierend auf den Bewegungsunschärfeparametern;
Anwenden von Unschärfe auf das Bild, um ein unscharfes Bild herzustellen, durch Verwenden des mindestens einen Unschärfekerns an jedem entsprechenden Pixel;
Durchführen einer Bildkomposition am unscharfen Bild, um ein Ausgabebild herzustellen; und Präsentieren des Ausgabebildes auf der mobilen Vorrichtung,
wobei der mindestens eine Sensorausgang Geschwindigkeitsdaten in Bezug auf eine Bewegung der mobilen Vorrichtung umfasst.

2. Verfahren nach Anspruch 1, weiter umfassend Wiederholen des Vorgangs, um das Ausgabebild auf Änderungen des mindestens einen Sensorausgangs im Laufe der Zeit reagieren zu lassen.

3. Verfahren nach Anspruch 1 oder Anspruch 2, wobei das Anwenden von Unschärfe Verwenden einer Winkelkarte umfasst, um Unschärferichtung am entsprechenden Pixel anzupassen.

**4.** Verfahren nach einem der Ansprüche 1 bis 3, wobei das Anwenden von Unschärfe weiter Verwenden einer Tiefenkarte umfasst, um die Unschärfestärke an jedem entsprechenden Pixel anzupassen.

**5.** Verfahren nach einem der Ansprüche 1 bis 4, weiter umfassend Verwenden einer Maskenkarte, um Vordergrundobjekte von einem Hintergrundobjekt zu trennen, wobei das Anwenden von Unschärfe selektiv auf Vordergrund- und Hintergrundobjekte basierend auf den Metadaten durchgeführt wird.

**6.** Verfahren nach einem der Ansprüche 1 bis 5, weiter umfassend Bestimmen der Anzahl an radialen Unschärfezentren aus den Metadaten und, falls mehr als ein radiales Unschärfezentrum vorhanden ist, Erzeugen mehrerer Unschärfevektorkarten, Ableiten von Unschärfevektorkartengewichtungen und Aggregieren der mehreren Unschärfevektorkarten, um eine aggregierte Unschärfevektorkarte zu erstellen, die zum Anwenden von Unschärfe verwendet wird.

**7.** Verfahren nach einem der Ansprüche 1 bis 6, weiter umfassend Ableiten eines radialen Unschärfezentrums basierend auf den Metadaten.

**8.** Verfahren nach Anspruch 7, weiter umfassend Erzeugen einer Unschärfevektorkarte basierend auf dem radialen Unschärfezentrum.

**9.** Verfahren nach einem der Ansprüche 1 bis 8, weiter umfassend Bestimmen aus den Metadaten, ob eine Gesamtheit des Bildes unscharf zu machen ist, nur Hintergrundbereiche des Bildes unscharf zu machen sind, oder ob Vordergrundbilder unscharf zu machen sind.

**10.** Verfahren nach Anspruch 9, weiter umfassend Erzeugen einer aggregierten Unschärfevektorkarte basierend auf der Unschärfevektorkarte und abgeleiteter Unschärfevektorkartengewichtungen.

**11.** Verfahren nach einem der Ansprüche 1 bis 10, weiter umfassend Erzeugen einer Stärke- und Richtungskarte für Bewegungsunschärfe basierend auf den Metadaten.

**12.** Verfahren nach einem der Ansprüche 1 bis 11, weiter umfassend Modifizieren des Unschärfekerns, um nur in einem Hintergrundbereich des Bildes Koeffizienten aufzuweisen.

**13.** Verfahren nach einem der Ansprüche 1 bis 12, weiter umfassend Empfangen einer Maskenkarte eines Hintergrundbereichs des Bildes und eines oder mehrerer Vordergrundbilder, wobei die Maskenkarte in den Metadaten identifiziert ist.

**14.** Verfahren nach einem der Ansprüche 1 bis 13, wobei Erzeugen der Bewegungsunschärfeparameter Verwenden einer Maskenkarte umfasst, die zwischen Vordergrundobjekten und Hintergrund im Bild maskiert.

**15.** Verfahren nach einem der Ansprüche 1 bis 14, wobei Erzeugen der Bewegungsunschärfeparameter Verwenden einer Tiefenkarte beinhaltet, die Unschärfegewichtungswerte bereitstellt.

**Revendications**

**1.** Procédé de fourniture de flou de mouvement appliqué à une image visualisée sur un dispositif mobile, comprenant :

la mesure d'au moins une sortie de capteur à partir du dispositif mobile ;
la génération des paramètres de flou de mouvement sur la base de la au moins une sortie de capteur et de métadonnées fournies avec l'image ;
la sélection, à partir d'une banque de filtres et sur la base des paramètres de flou de mouvement, d'au moins un noyau de flou pour un pixel correspondant de l'image ;
l'application d'un flou à l'image pour produire une image floutée en utilisant le au moins un noyau de flou au niveau de chaque pixel correspondant ;
la réalisation de la composition d'image sur l'image floutée pour produire une image de sortie ; et la présentation de l'image de sortie sur le dispositif mobile,
dans lequel la au moins une sortie de capteur comprend des données de vitesse liées à un mouvement du dispositif mobile.

**2.** Procédé selon la revendication 1, comprenant en outre la répétition de la procédure pour rendre l'image de sortie sensible à des changements de la au moins une sortie de capteur au fil du temps.

**3.** Procédé selon la revendication 1 ou la revendication 2, dans lequel le flou appliqué comprend l'utilisation d'une carte d'angles pour ajuster la direction du flou au niveau du pixel correspondant.

**4.** Procédé selon l'une quelconque des revendications 1 à 3, dans lequel le flou appliqué comprend en outre l'utilisation d'une carte de profondeurs pour ajuster l'intensité du flou au niveau de chaque pixel correspondant.

**5.** Procédé selon l'une quelconque des revendications 1 à 4, comprenant en outre l'utilisation d'une carte de masques pour séparer des objets de premier plan d'un objet d'arrière-plan, l'application d'un flou étant effectuée de manière sélective sur des objets de premier plan et d'arrière-plan sur la base des métadonnées.

**6.** Procédé selon l'une quelconque des revendications 1 à 5, comprenant en outre la détermination du nombre de centres de flou radial à partir des métadonnées et, s'il existe plus d'un centre de flou radial, la génération de multiple cartes de vecteurs de flou, la dérivation des poids des cartes de vecteurs de flou et l'agrégation des multiples cartes de vecteurs de flou pour créer une carte de vecteurs de flou agrégée utilisée pour l'application d'un flou.

**7.** Procédé selon l'une quelconque des revendications 1 à 6, comprenant en outre la dérivation d'un centre de flou radial sur la base des métadonnées.

**8.** Procédé selon la revendication 7, comprenant en outre la génération d'une carte de vecteurs de flou sur la base du centre de flou radial.

**9.** Procédé selon l'une quelconque des revendications 1 à 8, comprenant en outre la détermination, à partir des métadonnées, que l'intégralité de l'image doit être floutée, que seules des régions d'arrière-plan de l'image doivent être floutées, ou que des images de premier plan doivent être floutées.

**10.** Procédé selon la revendication 9, comprenant en outre la génération d'une carte de vecteurs de flou agrégée sur la base de la carte de vecteurs de flou et des poids de carte de vecteurs de flou dérivés.

**11.** Procédé selon l'une quelconque des revendications 1 à 10, comprenant en outre la génération d'une carte d'intensités et de directions du flou de mouvement sur la base des métadonnées.

**12.** Procédé selon l'une quelconque des revendications 1 à 11, comprenant en outre la modification du noyau de flou pour présenter des coefficients uniquement dans une région d'arrière-plan de l'image.

**13.** Procédé selon l'une quelconque des revendications 1 à 12, comprenant en outre la réception d'une carte de masques d'une région d'arrière-plan de l'image et d'une ou plusieurs images de premier plan, la carte de masques étant identifiée dans les métadonnées.

**14.** Procédé selon l'une quelconque des revendications 1 à 13, dans lequel la génération des paramètres de flou de mouvement inclut l'utilisation d'un masque de cartes entre des objets de premier plan et l'arrière-plan dans l'image.

**15.** Procédé selon l'une quelconque des revendications 1 à 14, dans lequel la génération des paramètres de flou de mouvement inclut l'utilisation d'une carte de profondeurs fournissant des valeurs de pondération du flou.

EP 4 449 341 B1

FIG. 1

FIG. 2

310

PREFERENCE
INPUT

320

INPUT FOLDER

| INPUT IMAGE | DEPTH MAP | MASK MAP | ANGLE MAP |

321          322          323          324

IMAGE
ENCODER

330

MUX

335

ENCODER
OUTPUT          390

## FIG. 3

415

DEVICE
VELOCITY

425

METADATA → MOTION BLUR
PARAMETERS
ESTIMATION $(S,\theta)$ → Q
QUANTIZATION $(S',\theta')$ → BLUR
APPLICATION

435

FILTER BANK

$(S'(i),\theta'(i))$          BLUR
KERNEL

410          420          430          440

(STRENGTH,
DIRECTION)

## FIG. 4

FIG. 5

DEVICE
VELOCITY
$\vec{V} = (v_x, 0, 0)$

610

630

$(C_x, C_y)$
RADIAL BLUR
CENTER

620

UNI-DIRECTIONAL BLUR

**FIG. 6A**

DEVICE
VELOCITY
$\vec{V} = (0, 0, v_z)$

610

640

620

$(C_x, C_y)$
RADIAL BLUR
CENTER

RADIAL BLUR

**FIG. 6B**

COORDINATE FOR THE
i-th PIXEL $(X(i), Y(i))$

RADIAL BLUR
CENTER
$(R_x, R_y)$

IMAGE PLANE

**FIG. 7**

EP 4 449 341 B1

DEPTH MAP

RELATIVE DEPTH LEVEL

0.8
0.7
0.6
0.5
0.4
0.3
0.2
0.1
0

**FIG. 8**

DEPTH MAP

RELATIVE DEPTH

0.4
0.35
0.3
0.25
0.2
0.15
0.1

$O_1$

$(C_x', C_y')$

$(O_{x_1}, O_{y_1})$

$(C_x, C_y)$

$O_2$

$(O_{x_2}, O_{y_2})$

- $O_1, O_2$:
  OFFSET CENTERS

- $(C_x, C_y)$:
  IMAGE CENTER

- $(C_x', C_y')$:
  SHIFTED IMAGE
  CENTER

**FIG. 9**

DEPTH MAP

FIG. 10

(a) (ANG_X, ANG_Y)　　　(b) BLUR VECTOR MAP $(b_x, b_y)$　　　(c) BLUR MAGNITUDE MAP $(M)$

FIG. 11

1230

1220

1210

$\phi(i)$

1220
BLUR VECTOR:
$(b_x(i), b_y(i))$

1230

1210
EXPECTED DIRECTION:
$(ANG\_X(i), ANG\_Y(i))$

FIG. 12

FIG. 13

FIG. 14

(a) GHOSTING ARTIFACT

1501  1502

1505

(b) BLURRED IMAGE

(c) BINARIZED MASK

FIG. 15

BLUR KERNEL
1605

1610

FIG. 16

EP 4 449 341 B1

INPUT IMAGE

BLURRED IMAGE

×

+

×

(a)

(b)

(c)

FIG. 17

(a) BINARIZED MASK

⇩

(b) BLURRED MASK

⇩

(c) HARD EXPANDED MASK

⇩

(d) SOFT EXPANDED MASK

FIG. 18

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LANCELLE M et al.** *Controlling Motion Blur in Synthetic Long Time Exposures*

- **RATHNAYAKE CHAMILA et al.** *Image database with synchronized sensor data for vision based navigation systems*